(19) Europäisches Patentamt
European Patent Office
Office européen des brevets

(11) **EP 2 925 790 B1**

(12) **EUROPEAN PATENT SPECIFICATION**

(45) Date of publication and mention of the grant of the patent:
**07.07.2021 Bulletin 2021/27**

(51) Int Cl.:
***C08B 30/04*** *(2006.01)*

(21) Application number: **13858884.3**

(22) Date of filing: **26.11.2013**

(86) International application number:
**PCT/CN2013/087866**

(87) International publication number:
**WO 2014/082565 (05.06.2014 Gazette 2014/23)**

(54) **MILLING PROCESS**

MAHLVERFAHREN

PROCÉDÉ DE BROYAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.11.2012 PCT/CN2012/085364**

(43) Date of publication of application:
**07.10.2015 Bulletin 2015/41**

(73) Proprietor: **Novozymes A/S**
**2880 Bagsvaerd (DK)**

(72) Inventors:
• **HAN, Wang**
  **Beijing 100016 (CN)**
• **LONG, Zhen**
  **Beijing 102218 (CN)**
• **MCLAUGHLIN, Scott R.**
  **Wake Forest, North Carolina 27587 (US)**
• **XU, Wanghui**
  **Beijing 100083 (CN)**

(74) Representative: **NZ EPO Representatives**
**Krogshoejvej 36**
**2880 Bagsvaerd (DK)**

(56) References cited:
**WO-A1-02/00731        WO-A1-02/00731**
**CN-A- 1 964 991        US-A1- 2003 092 149**
**US-A1- 2010 043 105**

• **SELIG M J ET AL: "Synergistic enhancement of cellobiohydrolase performance on pretreated corn stover by addition of xylanase and esterase activities", BIORESOURCE TECHNOLOGY, ELSEVIER BV, GB, vol. 99, no. 11, 1 July 2008 (2008-07-01), pages 4997-5005, XP022606313, ISSN: 0960-8524, DOI: 10.1016/J.BIORTECH.2007.09.064 [retrieved on 2007-11-19]**
• **None**

EP 2 925 790 B1

SEQUENCE LISTING

<110> Novozymes A/S

<120> Milling Process

<130> 12517-WO-PCT[2]

<160> 8

<170> PatentIn version 3.5

<210> 1
<211> 377
<212> PRT
<213> H. insolens

<400> 1

Met Lys Val Pro Thr Leu Ile Ser Ser Leu Leu Ala Leu Val Ser Phe
1                5                  10                    15

Ser Glu Ala Thr Pro Leu Ile Lys Arg Ala Thr Leu Thr Arg Val Asn
            20              25              30

Asn Phe Gly Asn Asn Pro Ser Gly Ala Arg Met Tyr Ile Tyr Val Pro
        35              40              45

Asp Arg Leu Gln Pro Arg Pro Ala Val Leu Thr Ala Val His Tyr Cys
    50              55              60

Thr Gly Thr Ala Asn Ala Phe Tyr Thr Gly Thr Pro Tyr Ala Arg Leu
65              70              75              80

Ala Asp Gln Tyr Gly Phe Ile Val Val Tyr Pro Glu Ser Pro Asn Asn
            85              90              95

Gly Gly Cys Trp Asp Val Ser Ser Arg Ala Ala Tyr Thr Arg Asp Ser
        100             105             110

Gly Ser Asn Ser His Ala Ile Ser Leu Met Thr Lys Trp Ala Leu Gln
    115             120             125

Gln Tyr Asn Gly Asp Pro Glu Lys Val Phe Val Ala Gly Thr Ser Ser
    130             135             140

Gly Ala Met Met Thr Asn Val Leu Ser Ala Val Tyr Pro Asp Leu Tyr
145             150             155             160

Lys Ala Ala Ala Ala Tyr Ala Gly Val Pro Ala Gly Cys Phe Tyr Thr
            165             170             175

```
Gly Thr Val Ala Gly Trp Asn Ser Thr Cys Ala Asn Gly Gln Ser Ile
        180                 185                 190

Thr Thr Gln Glu His Trp Ala Arg Thr Ala Leu Asp Met Tyr Pro Gly
        195                 200                 205

Tyr Thr Gly Pro Arg Pro Arg Met Leu Ile Tyr His Gly Ser Ala Asp
        210                 215                 220

Thr Thr Ile Tyr Pro Arg Asn Phe Asn Glu Thr Leu Lys Gln Trp Ala
225                 230                 235                 240

Gly Val Phe Gly Tyr Thr Tyr Gly Gln Pro Gln Gln Thr Leu Pro Asn
                245                 250                 255

Thr Pro Ser Ala Pro Tyr Thr Lys Tyr Val Tyr Gly Pro Asn Leu Val
        260                 265                 270

Gly Ile Tyr Gly Ser Gly Val Thr His Asn Ile Pro Val Asn Gly Ala
        275                 280                 285

Asn Asp Met Glu Trp Phe Gly Ile Thr Gly Asn Pro Thr Thr Thr Ser
    290                 295                 300

Thr Ser Ala Thr Val Pro Thr Thr Thr Ser Ser Pro Gly Thr Thr Ser
305                 310                 315                 320

Thr Ser Ala Pro Val Thr Thr Thr Thr Ser Arg Ala Pro Pro Pro Pro
                325                 330                 335

Thr Gln Thr Cys Ile Pro Val Pro Arg Trp Gly Gln Cys Gly Gly Ile
        340                 345                 350

Thr Trp Gly Gly Cys Thr Val Cys Glu Ala Pro Tyr Thr Cys Gln Lys
        355                 360                 365

Leu Asn Asp Trp Tyr Ser Gln Cys Leu
    370                 375
```

<210> 2
<211> 413
<212> PRT
<213> T. terrestis

<400> 2

```
Met Lys Pro Ser Val Val Ala Gly Leu Phe Ala Ser Gly Ala Ala Ala
1               5                   10                  15
```

```
Gln Ser Gly Ala Trp Gly Gln Cys Gly Gly Ile Gly Tyr Thr Gly Pro
        20                  25                  30

Thr Ser Cys Val Ser Gly Tyr Arg Cys Val Tyr Val Asn Asp Trp Tyr
        35                  40                  45

Ser Gln Cys Gln Pro Gly Ala Ala Thr Thr Thr Thr Ser Pro Pro Ala
        50                  55                  60

Ser Ser Thr Ser Thr Pro Pro Thr Ser Thr Gly Thr Ala Gly Val Arg
65                  70                  75                  80

Tyr Val Gly Arg Val Asn Pro Ser Thr Lys Glu Leu Ser Trp Pro Gly
                85                  90                  95

Thr Gly Ile Ser Phe Thr Phe Thr Gly Thr Ser Ala Thr Ile Gly Ile
            100                 105                 110

Ala Ser Val Ser Gly Thr Asn Ser Val Asp Leu Val Val Asp Asp Gly
        115                 120                 125

Asp Pro Ile Val Ile Thr Ser Phe Gly Ser Ser Ile Thr Thr Pro Ala
        130                 135                 140

Gly Leu Ser Gln Gly Thr His Thr Val Thr Leu Arg Lys Arg Ser Glu
145                 150                 155                 160

Ala Leu Tyr Gly Ser Ile Phe Leu Gly Ser Val Thr Thr Asp Gly Ala
                165                 170                 175

Phe Val Ala Gly Thr Val Pro Thr Arg Gln Ile Glu Ile Ile Gly Asp
            180                 185                 190

Ser Ile Thr Val Gly Tyr Gly Leu Asp Gly Thr Asn Pro Cys Thr Asn
            195                 200                 205

Asn Ala Thr Val Glu Asp Asn Pro Lys Thr Tyr Gly Ala Leu Ala Ala
        210                 215                 220

Ala Ala Leu Gly Ala Asp Tyr Asn Val Ile Ala Trp Ser Gly Lys Gly
225                 230                 235                 240

Val Val Arg Asn Val Ala Thr Gly Ser Pro Asp Thr Ser Pro Leu Met
                245                 250                 255

Pro Glu Leu Tyr Thr Arg Tyr Gly Ala Asn Asp Pro Asp Asn Ser Tyr
            260                 265                 270
```

```
Pro Tyr Pro Pro Thr Trp Ser Pro Asp Ala Val Val Ile Asn Leu Gly
        275             280             285

Thr Asn Asp Phe Ser Tyr Ile Ala Trp Asp Ala Ser Gly Asn Ala Tyr
        290             295             300

Ala Ala Arg Pro Pro Leu Asn Ala Thr Thr Tyr Thr Asp Gly Met Val
305             310             315             320

Ala Phe Ala Gln Ser Ile Arg Ala His Tyr Pro Ala Ala His Val Phe
                325             330             335

Leu Val Gly Ser Pro Met Leu Ser Asp Ser Tyr Pro Thr Ala Ala Asp
        340             345             350

Ala Gln Lys Thr Thr Gln Thr Asn Ala Leu Lys Ser Ala Val Ala Gln
        355             360             365

Leu Gly Ala Asn Ala His Phe Val Asp Trp Pro Thr Gln Gly Ser Asp
    370             375             380

Val Gly Cys Asp Tyr His Pro Asn Ala Ala Thr His Ala Ala Glu Ala
385             390             395             400

Ala Val Leu Ala Asp Ala Ile Arg Ser Ala Leu Gly Trp
                405             410
```

<210> 3
<211> 250
<212> PRT
<213> Thermoascus aurantiacus

<400> 3

```
Met Ser Phe Ser Lys Ile Ile Ala Thr Ala Gly Val Leu Ala Ser Ala
1               5               10              15

Ser Leu Val Ala Gly His Gly Phe Val Gln Asn Ile Val Ile Asp Gly
            20              25              30

Lys Lys Tyr Tyr Gly Gly Tyr Leu Val Asn Gln Tyr Pro Tyr Met Ser
        35              40              45

Asn Pro Pro Glu Val Ile Ala Trp Ser Thr Thr Ala Thr Asp Leu Gly
    50              55              60

Phe Val Asp Gly Thr Gly Tyr Gln Thr Pro Asp Ile Ile Cys His Arg
65              70              75              80
```

```
Gly Ala Lys Pro Gly Ala Leu Thr Ala Pro Val Ser Pro Gly Gly Thr
            85                  90              95

Val Glu Leu Gln Trp Thr Pro Trp Pro Asp Ser His His Gly Pro Val
            100                 105             110

Ile Asn Tyr Leu Ala Pro Cys Asn Gly Asp Cys Ser Thr Val Asp Lys
            115                 120             125

Thr Gln Leu Glu Phe Phe Lys Ile Ala Glu Ser Gly Leu Ile Asn Asp
    130                 135                 140

Asp Asn Pro Pro Gly Ile Trp Ala Ser Asp Asn Leu Ile Ala Ala Asn
145                 150                 155                 160

Asn Ser Trp Thr Val Thr Ile Pro Thr Thr Ile Ala Pro Gly Asn Tyr
            165                 170                 175

Val Leu Arg His Glu Ile Ile Ala Leu His Ser Ala Gln Asn Gln Asp
            180                 185                 190

Gly Ala Gln Asn Tyr Pro Gln Cys Ile Asn Leu Gln Val Thr Gly Gly
            195                 200                 205

Gly Ser Asp Asn Pro Ala Gly Thr Leu Gly Thr Ala Leu Tyr His Asp
    210                 215                 220

Thr Asp Pro Gly Ile Leu Ile Asn Ile Tyr Gln Lys Leu Ser Ser Tyr
225                 230                 235                 240

Ile Ile Pro Gly Pro Pro Leu Tyr Thr Gly
            245                 250
```

<210> 4
<211> 253
<212> PRT
<213> Penicillium emersonii

<400> 4

```
Met Leu Ser Ser Thr Thr Arg Thr Leu Ala Phe Thr Gly Leu Ala Gly
1               5                   10                  15

Leu Leu Ser Ala Pro Leu Val Lys Ala His Gly Phe Val Gln Gly Ile
            20                  25                  30

Val Ile Gly Asp Gln Phe Tyr Ser Gly Tyr Ile Val Asn Ser Phe Pro
            35                  40                  45
```

```
Tyr Glu Ser Asn Pro Pro Pro Val Ile Gly Trp Ala Thr Thr Ala Thr
    50              55              60

Asp Leu Gly Phe Val Asp Gly Thr Gly Tyr Gln Gly Pro Asp Ile Ile
65              70              75              80

Cys His Arg Asn Ala Thr Pro Ala Pro Leu Thr Ala Pro Val Ala Ala
            85              90              95

Gly Gly Thr Val Glu Leu Gln Trp Thr Pro Trp Pro Asp Ser His His
        100             105             110

Gly Pro Val Ile Thr Tyr Leu Ala Pro Cys Asn Gly Asn Cys Ser Thr
        115             120             125

Val Asp Lys Thr Thr Leu Glu Phe Phe Lys Ile Asp Gln Gln Gly Leu
    130             135             140

Ile Asp Asp Thr Ser Pro Pro Gly Thr Trp Ala Ser Asp Asn Leu Ile
145             150             155             160

Ala Asn Asn Asn Ser Trp Thr Val Thr Ile Pro Asn Ser Val Ala Pro
            165             170             175

Gly Asn Tyr Val Leu Arg His Glu Ile Ile Ala Leu His Ser Ala Asn
        180             185             190

Asn Lys Asp Gly Ala Gln Asn Tyr Pro Gln Cys Ile Asn Ile Glu Val
    195             200             205

Thr Gly Gly Gly Ser Asp Ala Pro Glu Gly Thr Leu Gly Glu Asp Leu
    210             215             220

Tyr His Asp Thr Asp Pro Gly Ile Leu Val Asp Ile Tyr Glu Pro Ile
225             230             235             240

Ala Thr Tyr Thr Ile Pro Gly Pro Pro Glu Pro Thr Phe
            245             250
```

<210> 5
<211> 418
<212> PRT
<213> Trichoderma reesei

<400> 5

```
Met Asn Lys Ser Val Ala Pro Leu Leu Leu Ala Ala Ser Ile Leu Tyr
1               5               10              15
```

```
Gly Gly Ala Val Ala Gln Gln Thr Val Trp Gly Gln Cys Gly Gly Ile
            20              25                  30

Gly Trp Ser Gly Pro Thr Asn Cys Ala Pro Gly Ser Ala Cys Ser Thr
            35              40                  45

Leu Asn Pro Tyr Tyr Ala Gln Cys Ile Pro Gly Ala Thr Thr Ile Thr
            50              55                  60

Thr Ser Thr Arg Pro Pro Ser Gly Pro Thr Thr Thr Arg Ala Thr
65              70              75                  80

Ser Thr Ser Ser Ser Thr Pro Pro Thr Ser Ser Gly Val Arg Phe Ala
                85              90                  95

Gly Val Asn Ile Ala Gly Phe Asp Phe Gly Cys Thr Thr Asp Gly Thr
            100             105                 110

Cys Val Thr Ser Lys Val Tyr Pro Pro Leu Lys Asn Phe Thr Gly Ser
            115             120                 125

Asn Asn Tyr Pro Asp Gly Ile Gly Gln Met Gln His Phe Val Asn Glu
            130             135                 140

Asp Gly Met Thr Ile Phe Arg Leu Pro Val Gly Trp Gln Tyr Leu Val
145             150             155                 160

Asn Asn Asn Leu Gly Gly Asn Leu Asp Ser Thr Ser Ile Ser Lys Tyr
                165             170                 175

Asp Gln Leu Val Gln Gly Cys Leu Ser Leu Gly Ala Tyr Cys Ile Val
            180             185                 190

Asp Ile His Asn Tyr Ala Arg Trp Asn Gly Gly Ile Ile Gly Gln Gly
            195             200                 205

Gly Pro Thr Asn Ala Gln Phe Thr Ser Leu Trp Ser Gln Leu Ala Ser
            210             215                 220

Lys Tyr Ala Ser Gln Ser Arg Val Trp Phe Gly Ile Met Asn Glu Pro
225             230             235                 240

His Asp Val Asn Ile Asn Thr Trp Ala Ala Thr Val Gln Glu Val Val
                245             250                 255

Thr Ala Ile Arg Asn Ala Gly Ala Thr Ser Gln Phe Ile Ser Leu Pro
            260             265                 270
```

26

```
Gly Asn Asp Trp Gln Ser Ala Gly Ala Phe Ile Ser Asp Gly Ser Ala
        275             280             285

Ala Ala Leu Ser Gln Val Thr Asn Pro Asp Gly Ser Thr Thr Asn Leu
        290             295             300

Ile Phe Asp Val His Lys Tyr Leu Asp Ser Asp Asn Ser Gly Thr His
305             310             315             320

Ala Glu Cys Thr Thr Asn Asn Ile Asp Gly Ala Phe Ser Pro Leu Ala
            325             330             335

Thr Trp Leu Arg Gln Asn Asn Arg Gln Ala Ile Leu Thr Glu Thr Gly
        340             345             350

Gly Gly Asn Val Gln Ser Cys Ile Gln Asp Met Cys Gln Gln Ile Gln
        355             360             365

Tyr Leu Asn Gln Asn Ser Asp Val Tyr Leu Gly Tyr Val Gly Trp Gly
    370             375             380

Ala Gly Ser Phe Asp Ser Thr Tyr Val Leu Thr Glu Thr Pro Thr Gly
385             390             395             400

Ser Gly Asn Ser Trp Thr Asp Thr Ser Leu Val Ser Ser Cys Leu Ala
            405             410             415

Arg Lys
```

<210> 6
<211> 296
<212> PRT
<213> Aspergillus aculeatus,

<400> 6

```
Met Ala Arg Leu Ser Gln Phe Leu Leu Ala Cys Ala Leu Ala Val Lys
1               5               10              15

Ala Phe Ala Ala Pro Ala Ala Glu Pro Val Glu Glu Arg Gly Pro Asn
            20              25              30

Phe Phe Ser Ala Leu Ala Gly Arg Ser Thr Gly Ser Ser Thr Gly Tyr
        35              40              45

Ser Asn Gly Tyr Tyr Tyr Ser Phe Trp Thr Asp Gly Ala Ser Gly Asp
    50              55              60
```

```
Val Glu Tyr Ser Asn Gly Ala Gly Gly Ser Tyr Ser Val Thr Trp Ser
65              70              75              80

Ser Ala Ser Asn Phe Val Gly Gly Lys Gly Trp Asn Pro Gly Ser Ala
                85              90              95

His Asp Ile Thr Tyr Ser Gly Ser Trp Thr Ser Thr Gly Asn Ser Asn
            100             105             110

Ser Tyr Leu Ser Val Tyr Gly Trp Thr Thr Gly Pro Leu Val Glu Tyr
        115             120             125

Tyr Ile Leu Glu Asp Tyr Gly Glu Tyr Asn Pro Gly Ser Ala Gly Thr
    130             135             140

Tyr Lys Gly Ser Val Tyr Ser Asp Gly Ser Thr Tyr Asn Ile Tyr Thr
145             150             155             160

Ala Thr Arg Thr Asn Ala Pro Ser Ile Gln Gly Thr Ala Thr Phe Thr
                165             170             175

Gln Tyr Trp Ser Ile Arg Gln Thr Lys Arg Val Gly Gly Thr Val Thr
            180             185             190

Thr Ala Asn His Phe Asn Ala Trp Ala Lys Leu Gly Met Asn Leu Gly
        195             200             205

Thr His Asn Tyr Gln Ile Val Ala Thr Glu Gly Tyr Tyr Ser Ser Gly
    210             215             220

Ser Ala Ser Ile Thr Val Ala Glu Arg Ala Asp Ile Leu Leu Arg Tyr
225             230             235             240

Met Leu Tyr Leu Trp His Arg Phe Cys Asp Gly Asn Glu Trp Met Arg
            245             250             255

Lys Leu Ala Cys Ser Tyr Met Ser Arg Val Val Val Ser Glu Phe Gly
        260             265             270

Ala Leu Asp Phe Glu Leu Phe Phe Ile Gln Ser Gln Pro Pro Val Ser
        275             280             285

Gln Gln Val Lys Lys Lys Lys Lys
    290             295
```

<210> 7
<211> 397

<212> PRT
<213> Aspergillus fumigatus

<400> 7

```
Met Val His Leu Ser Ser Leu Ala Ala Ala Leu Ala Ala Leu Pro Leu
1               5               10                    15

Val Tyr Gly Ala Gly Leu Asn Thr Ala Ala Lys Ala Lys Gly Leu Lys
            20              25                  30

Tyr Phe Gly Ser Ala Thr Asp Asn Pro Glu Leu Thr Asp Ser Ala Tyr
        35              40                  45

Val Ala Gln Leu Ser Asn Thr Asp Asp Phe Gly Gln Ile Thr Pro Gly
    50              55                  60

Asn Ser Met Lys Trp Asp Ala Thr Glu Pro Ser Gln Asn Ser Phe Ser
65              70                  75                  80

Phe Ala Asn Gly Asp Ala Val Val Asn Leu Ala Asn Lys Asn Gly Gln
            85              90                  95

Leu Met Arg Cys His Thr Leu Val Trp His Ser Gln Leu Pro Asn Trp
            100             105                 110

Val Ser Ser Gly Ser Trp Thr Asn Ala Thr Leu Leu Ala Ala Met Lys
        115             120                 125

Asn His Ile Thr Asn Val Val Thr His Tyr Lys Gly Lys Cys Tyr Ala
    130             135                 140

Trp Asp Val Val Asn Glu Ala Leu Asn Glu Asp Gly Thr Phe Arg Asn
145             150                 155                 160

Ser Val Phe Tyr Gln Ile Ile Gly Pro Ala Tyr Ile Pro Ile Ala Phe
            165             170                 175

Ala Thr Ala Ala Ala Ala Asp Pro Asp Val Lys Leu Tyr Tyr Asn Asp
        180             185                 190

Tyr Asn Ile Glu Tyr Ser Gly Ala Lys Ala Thr Ala Ala Gln Asn Ile
        195             200                 205

Val Lys Met Ile Lys Ala Tyr Gly Ala Lys Ile Asp Gly Val Gly Leu
210             215                 220

Gln Ala His Phe Ile Val Gly Ser Thr Pro Ser Gln Ser Asp Leu Thr
```

```
                225                    230                    235                    240

     Thr Val Leu Lys Gly Tyr Thr Ala Leu Gly Val Glu Val Ala Tyr Thr
                     245             250                 255

     Glu Leu Asp Ile Arg Met Gln Leu Pro Ser Thr Ala Ala Lys Leu Ala
                 260                 265                 270

     Gln Gln Ser Thr Asp Phe Gln Gly Val Ala Ala Ala Cys Val Ser Thr
                 275                 280                 285

     Thr Gly Cys Val Gly Val Thr Ile Trp Asp Trp Thr Asp Lys Tyr Ser
         290                 295                 300

     Trp Val Pro Ser Val Phe Gln Gly Tyr Gly Ala Pro Leu Pro Trp Asp
     305                 310                 315                 320

     Glu Asn Tyr Val Lys Lys Pro Ala Tyr Asp Gly Leu Met Ala Gly Leu
                     325                 330                 335

     Gly Ala Ser Gly Ser Gly Thr Thr Thr Thr Thr Thr Thr Thr Ser Thr
                 340                 345                 350

     Thr Thr Gly Gly Thr Asp Pro Thr Gly Val Ala Gln Lys Trp Gly Gln
                 355                 360                 365

     Cys Gly Gly Ile Gly Trp Thr Gly Pro Thr Thr Cys Val Ser Gly Thr
         370                 375                 380

     Thr Cys Gln Lys Leu Asn Asp Trp Tyr Ser Gln Cys Leu
     385                 390                 395
```

<210> 8
<211> 792
<212> PRT
<213> Aspergillus fumigatus

<400> 8

```
Met Ala Val Ala Lys Ser Ile Ala Ala Val Leu Val Ala Leu Leu Pro
1               5                   10                  15

Gly Ala Leu Ala Gln Ala Asn Thr Ser Tyr Val Asp Tyr Asn Val Glu
            20                  25                  30

Ala Asn Pro Asp Leu Thr Pro Gln Ser Val Ala Thr Ile Asp Leu Ser
            35                  40                  45

Phe Pro Asp Cys Glu Asn Gly Pro Leu Ser Lys Thr Leu Val Cys Asp
```

50                          55                          60

Thr Ser Ala Arg Pro His Asp Arg Ala Ala Ala Leu Val Ser Met Phe
65                  70              75                  80

Thr Phe Glu Glu Leu Val Asn Asn Thr Gly Asn Thr Ser Pro Gly Val
            85              90                  95

Pro Arg Leu Gly Leu Pro Pro Tyr Gln Val Trp Ser Glu Ala Leu His
            100             105             110

Gly Leu Asp Arg Ala Asn Phe Thr Asn Glu Gly Glu Tyr Ser Trp Ala
            115             120             125

Thr Ser Phe Pro Met Pro Ile Leu Thr Met Ser Ala Leu Asn Arg Thr
            130             135             140

Leu Ile Asn Gln Ile Ala Thr Ile Ile Ala Thr Gln Gly Arg Ala Phe
145             150             155             160

Asn Asn Val Gly Arg Tyr Gly Leu Asp Val Tyr Ala Pro Asn Ile Asn
                165             170             175

Ala Phe Arg Ser Ala Met Trp Gly Arg Gly Gln Glu Thr Pro Gly Glu
            180             185             190

Asp Ala Tyr Cys Leu Ala Ser Ala Tyr Ala Tyr Glu Tyr Ile Thr Gly
            195             200             205

Ile Gln Gly Gly Val Asp Pro Glu His Leu Lys Leu Val Ala Thr Ala
            210             215             220

Lys His Tyr Ala Gly Tyr Asp Leu Glu Asn Trp Asp Gly His Ser Arg
225             230             235             240

Leu Gly Asn Asp Met Asn Ile Thr Gln Gln Glu Leu Ser Glu Tyr Tyr
            245             250             255

Thr Pro Gln Phe Leu Val Ala Ala Arg Asp Ala Lys Val His Ser Val
            260             265             270

Met Cys Ser Tyr Asn Ala Val Asn Gly Val Pro Ser Cys Ala Asn Ser
            275             280             285

Phe Phe Leu Gln Thr Leu Leu Arg Asp Thr Phe Gly Phe Val Glu Asp
            290             295             300

```
Gly Tyr Val Ser Ser Asp Cys Asp Ser Ala Tyr Asn Val Trp Asn Pro
305             310             315             320

His Glu Phe Ala Ala Asn Ile Thr Gly Ala Ala Ala Asp Ser Ile Arg
                325             330             335

Ala Gly Thr Asp Ile Asp Cys Gly Thr Thr Tyr Gln Tyr Tyr Phe Gly
            340             345             350

Glu Ala Phe Asp Glu Gln Glu Val Thr Arg Ala Glu Ile Glu Arg Gly
        355             360             365

Val Ile Arg Leu Tyr Ser Asn Leu Val Arg Leu Gly Tyr Phe Asp Gly
        370             375             380

Asn Gly Ser Val Tyr Arg Asp Leu Thr Trp Asn Asp Val Val Thr Thr
385             390             395             400

Asp Ala Trp Asn Ile Ser Tyr Glu Ala Ala Val Glu Gly Ile Val Leu
            405             410             415

Leu Lys Asn Asp Gly Thr Leu Pro Leu Ala Lys Ser Val Arg Ser Val
            420             425             430

Ala Leu Ile Gly Pro Trp Met Asn Val Thr Thr Gln Leu Gln Gly Asn
        435             440             445

Tyr Phe Gly Pro Ala Pro Tyr Leu Ile Ser Pro Leu Asn Ala Phe Gln
    450             455             460

Asn Ser Asp Phe Asp Val Asn Tyr Ala Phe Gly Thr Asn Ile Ser Ser
465             470             475             480

His Ser Thr Asp Gly Phe Ser Glu Ala Leu Ser Ala Ala Lys Lys Ser
            485             490             495

Asp Val Ile Ile Phe Ala Gly Gly Ile Asp Asn Thr Leu Glu Ala Glu
            500             505             510

Ala Met Asp Arg Met Asn Ile Thr Trp Pro Gly Asn Gln Leu Gln Leu
        515             520             525

Ile Asp Gln Leu Ser Gln Leu Gly Lys Pro Leu Ile Val Leu Gln Met
    530             535             540

Gly Gly Gly Gln Val Asp Ser Ser Ser Leu Lys Ser Asn Lys Asn Val
545             550             555             560
```

34

Asn Ser Leu Ile Trp Gly Gly Tyr Pro Gly Gln Ser Gly Gly Gln Ala
565                   570               575

Leu Leu Asp Ile Ile Thr Gly Lys Arg Ala Pro Ala Gly Arg Leu Val
580               585               590

Val Thr Gln Tyr Pro Ala Glu Tyr Ala Thr Gln Phe Pro Ala Thr Asp
595               600               605

Met Ser Leu Arg Pro His Gly Asn Asn Pro Gly Gln Thr Tyr Met Trp
610               615               620

Tyr Thr Gly Thr Pro Val Tyr Glu Phe Gly His Gly Leu Phe Tyr Thr
625               630               635               640

Thr Phe His Ala Ser Leu Pro Gly Thr Gly Lys Asp Lys Thr Ser Phe
645               650               655

Asn Ile Gln Asp Leu Leu Thr Gln Pro His Pro Gly Phe Ala Asn Val
660               665               670

Glu Gln Met Pro Leu Leu Asn Phe Thr Val Thr Ile Thr Asn Thr Gly
675               680               685

Lys Val Ala Ser Asp Tyr Thr Ala Met Leu Phe Ala Asn Thr Thr Ala
690               695               700

Gly Pro Ala Pro Tyr Pro Asn Lys Trp Leu Val Gly Phe Asp Arg Leu
705               710               715               720

Ala Ser Leu Glu Pro His Arg Ser Gln Thr Met Thr Ile Pro Val Thr
725               730               735

Ile Asp Ser Val Ala Arg Thr Asp Glu Ala Gly Asn Arg Val Leu Tyr
740               745               750

Pro Gly Lys Tyr Glu Leu Ala Leu Asn Asn Glu Arg Ser Val Val Leu
755               760               765

Gln Phe Val Leu Thr Gly Arg Glu Ala Val Ile Phe Lys Trp Pro Val
770               775               780

Glu Gln Gln Gln Ile Ser Ser Ala
785               790

35

## Description

### REFERENCE TO SEQUENCE LISTING

This application contains a Sequence Listing in computer readable form.

### FIELD OF THE INVENTION

The present invention relates to an improved process of treating crop kernels to provide a starch product of high quality suitable for conversion of starch into mono- and oligosaccharides, ethanol, sweeteners, etc.

### BACKGROUND OF THE INVENTION

Before starch, which is an important constituent in the kernels of most crops, such as corn, wheat, rice, sorghum bean, barley or fruit hulls, can be used for conversion of starch into saccharides, such as dextrose, fructose; alcohols, such as ethanol; and sweeteners, the starch must be made available and treated in a manner to provide a high purity starch. If starch contains more than 0.5% impurities, including the proteins, it is not suitable as starting material for starch conversion processes. To provide such pure and high quality starch product starting out from the kernels of crops, the kernels are often milled, as will be described further below.

Wet milling is often used for separating corn kernels into its four basic components: starch, germ, fiber and protein.

Typically wet milling processes comprise four basic steps. First the kernels are soaked or steeped for about 30 minutes to about 48 hours to begin breaking the starch and protein bonds. The next step in the process involves a coarse grind to break the pericarp and separate the germ from the rest of the kernel. The remaining slurry consisting of fiber, starch and protein is finely ground and screened to separate the fiber from the starch and protein. The starch is separated from the remaining slurry in hydrocyclones. The starch then can be converted to syrup or alcohol, or dried and sold as corn starch or chemically or physically modified to produce modified corn starch.

The use of enzymes has been suggested for the steeping step of wet milling processes. The commercial enzyme product Steepzyme® (available from Novozymes A/S) has been shown suitable for the first step in wet milling processes, i.e., the steeping step where corn kernels are soaked in water.

More recently, "enzymatic milling", a modified wet-milling process that uses proteases to significantly reduce the total processing time during corn wet milling and eliminates the need for sulfur dioxide as a processing agent, has been developed. Johnston et al., Cereal Chem, 81, p. 626-632 (2004).

US 6,566,125 discloses a method for obtaining starch from maize involving soaking maize kernels in water to produce soaked maize kernels, grinding the soaked maize kernels to produce a ground maize slurry, and incubating the ground maize slurry with enzyme (e.g., protease).

US 5,066,218 discloses a method of milling grain, especially corn, comprising cleaning the grain, steeping the grain in water to soften it, and then milling the grain with a cellulase enzyme.

WO 2002/000731 discloses a process of treating crop kernels, comprising soaking the kernels in water for 1-12 hours, wet milling the soaked kernels and treating the kernels with one or more enzymes including an acidic protease.

WO 2002/000911 discloses a process of starch gluten separation, comprising subjecting mill starch to an acidic protease.

WO 2002/002644 discloses a process of washing a starch slurry obtained from the starch gluten separation step of a milling process, comprising washing the starch slurry with an aqueous solution comprising an effective amount of acidic protease.

There remains a need for improvement of processes for providing starch suitable for conversion into mono- and oligo-saccharides, ethanol, sweeteners, etc.

### SUMMARY OF THE INVENTION

The invention provides a process for treating crop kernels, comprising the steps of a) soaking kernels in water to produce soaked kernels; b) grinding the soaked kernels; c) treating the soaked kernels in the presence of an acetylxylan esterase, wherein step c) is performed before, during or after step b); the process further comprising treating the soaked kernels in the presence of an enzyme selected from the group consisting of a protease, an endoglucanase, a xylanase, a cellobiohydrolase I, a cellobiohydrolase II, a GH61, and a combination thereof.

In one embodiment, the invention provides the use of an acetylxylan esterase to enhance the wet milling benefit of one or more enzymes.

## DETAILED DESCRIPTION OF THE INVENTION

Accordingly, it is an object of the invention to provide improved processes of treating crop kernels to provide starch of high quality.

In one aspect, the enzyme compositions useful in the processes of the disclosure provide benefits including, improving starch yield and/or purity, improving gluten quality and/or yield, improving fiber, gluten, or steep water filtration, dewatering and evaporation, easier germ separation and/or better post-saccharification filtration, and process energy savings thereof.

The present inventors have discovered the use of acetylxylan esterase in wet milling and in particular, the use of acetylxylan esterase in addition to other cellulase and protease, can provide a significant increase in, e.g., starch and gluten yields and milling fractionation. The use of acetylxylan esterase is believed to provide a boost on top of a base enzyme blend.

This can provide a benefit to the industry, e.g., on the basis of cost and ease of use.

Definitions of Enzymes

Acetylxylan esterase: The term "acetylxylan esterase" means a carboxylesterase (EC 3.1.1.72) that catalyzes the hydrolysis of acetyl group from polymeric xylan, acetylated xylose, acetylated glucose, alpha-napthyl acetate, and p-nitrophenyl acetate. For purposes of the present invention, acetylxylan esterase activity is determined using 0.5 mM p-nitrophenylacetate as substrate in 50 mM sodium acetate pH 5.0 containing 0.01% TWEEN™ 20 (polyoxyethylene sorbitan monolaurate). One unit of acetylxylan esterase is defined as the amount of enzyme capable of releasing 1 $\mu$mole of p-nitrophenolate anion per minute at 5, 25°C.

Beta-glucosidase: The term "beta-glucosidase" means a beta-D-glucoside glucohydrolase (E.C. 3.2.1.21) that catalyzes the hydrolysis of terminal non-reducing beta-D-glucose residues with the release of beta-D-glucose. For purposes of the present invention, beta-glucosidase activity is determined using p-nitrophenyl-beta-D-glucopyranoside as substrate according to the procedure of Venturi et al., 2002, Extracellular beta-D-glucosidase from Chaetomium thermophilum var. coprophilum: production, purification and some biochemical properties, J. Basic Microbiol. 42: 55-66. One unit of beta-glucosidase is defined as 1.0 $\mu$mole of p-nitrophenolate anion produced per minute at 25°C, pH 4.8 from 1 mM p-nitrophenyl-beta-D-glucopyranoside as substrate in 50 mM sodium citrate containing 0.01% TWEEN® 20.

Beta-xylosidase: The term "beta-xylosidase" means a beta-D-xyloside xylohydrolase (E.C. 3.2.1.37) that catalyzes the exo-hydrolysis of short beta (1→4)-xylooligosaccharides to remove successive D-xylose residues from non-reducing termini. For purposes of the present invention, one unit of beta-xylosidase is defined as 1.0 $\mu$mole of p-nitrophenolate anion produced per minute at 40°C, pH 5 from 1 mM p-nitrophenyl-beta-D-xyloside as substrate in 100 mM sodium citrate containing 0.01% TWEEN® 20.

Cellobiohydrolase: The term "cellobiohydrolase" means a 1,4-beta-D-glucan cellobiohydrolase (E.C. 3.2.1.91 and E.C. 3.2.1.176) that catalyzes the hydrolysis of 1,4-beta-D-glucosidic linkages in cellulose, cellooligosaccharides, or any beta-1,4-linked glucose containing polymer, releasing cellobiose from the reducing or non-reducing ends of the chain (Teeri, 1997, Crystalline cellulose degradation: New insight into the function of cellobiohydrolases, Trends in Biotechnology 15: 160-167; Teeri et al., 1998, Trichoderma reesei cellobiohydrolases: why so efficient on crystalline cellulose?, Biochem. Soc. Trans. 26: 173-178). Cellobiohydrolase activity is determined according to the procedures described by Lever et al., 1972, Anal. Biochem. 47: 273-279; van Tilbeurgh et al., 1982, FEBS Letters, 149: 152-156; van Tilbeurgh and Claeyssens, 1985, FEBS Letters, 187: 283-288; and Tomme et al., 1988, Eur. J. Biochem. 170: 575-581. In the present invention, the Tomme et al. method can be used to determine cellobiohydrolase activity.

Cellulolytic enzyme or cellulase: The term "cellulolytic enzyme" or "cellulase" means one or more (e.g., several) enzymes that hydrolyze a cellulosic material. Such enzymes include endoglucanase(s), cellobiohydrolase(s), beta-glucosidase(s), or combinations thereof. The two basic approaches for measuring cellulolytic activity include: (1) measuring the total cellulolytic activity, and (2) measuring the individual cellulolytic activities (endoglucanases, cellobiohydrolases, and beta-glucosidases) as reviewed in Zhang et al., Outlook for cellulase improvement: Screening and selection strategies, 2006, Biotechnology Advances 24: 452-481. Total cellulolytic activity is usually measured using insoluble substrates, including Whatman №1 filter paper, microcrystalline cellulose, bacterial cellulose, algal cellulose, cotton, pretreated lignocellulose, etc. The most common total cellulolytic activity assay is the filter paper assay using Whatman №1 filter paper as the substrate. The assay was established by the International Union of Pure and Applied Chemistry (IUPAC) (Ghose, 1987, Measurement of cellulase activities, Pure Appl. Chem. 59: 257-68).

Cellulosic material: The term "cellulosic material" means any material containing cellulose. Cellulose is a homopolymer of anyhdrocellobiose and thus a linear beta-(1-4)-D-glucan, while hemicelluloses include a variety of compounds, such as xylans, xyloglucans, arabinoxylans, and mannans in complex branched structures with a spectrum of substituents. Although generally polymorphous, cellulose is found in plant tissue primarily as an insoluble crystalline matrix of parallel glucan chains. Hemicelluloses usually hydrogen bond to cellulose, as well as to other hemicelluloses, which help stabilize the cell wall matrix.

Endoglucanase: The term "endoglucanase" means an endo-1,4-(1,3;1,4)-beta-D-glucan 4-glucanohydrolase (E.C. 3.2.1.4) that catalyzes endohydrolysis of 1,4-beta-D-glycosidic linkages in cellulose, cellulose derivatives (such as carboxymethyl cellulose and hydroxyethyl cellulose), lichenin, beta-1,4 bonds in mixed beta-1,3 glucans such as cereal beta-D-glucans or xyloglucans, and other plant material containing cellulosic components. Endoglucanase activity can be determined by measuring reduction in substrate viscosity or increase in reducing ends determined by a reducing sugar assay (Zhang et al., 2006, Biotechnology Advances 24: 452-481). For purposes of the present invention, endoglucanase activity is determined using carboxymethyl cellulose (CMC) as substrate according to the procedure of Ghose, 1987, Pure and Appl. Chem. 59: 257-268, at pH 5, 40°C.

Family 61 glycoside hydrolase: The term "Family 61 glycoside hydrolase" or "Family GH61" or "GH61" means a polypeptide falling into the glycoside hydrolase Family 61 according to Henrissat B., 1991, A classification of glycosyl hydrolases based on amino-acid sequence similarities, Biochem. J. 280: 309-316, and Henrissat B., and Bairoch A., 1996, Updating the sequence-based classification of glycosyl hydrolases, Biochem. J. 316: 695-696. The enzymes in this family were originally classified as a glycoside hydrolase family based on measurement of very weak endo-1,4-beta-D-glucanase activity in one family member. The structure and mode of action of these enzymes are non-canonical and they cannot be considered as bona fide glyco-sidases. However, they are kept in the CAZy classification on the basis of their capacity to enhance the breakdown of lignocellulose when used in conjunction with a cellulase or a mixture of cellulases.

Hemicellulolytic enzyme or hemicellulase: The term "hemicellulolytic enzyme" or "hemicellulase" means one or more (e.g., several) enzymes that hydrolyze a hemicellulosic material. See, for example, Shallom, D. and Shoham, Y. Microbial hemicellulases. Current Opinion In Microbiology, 2003, 6(3): 219-228). Hemicellulases are key components in the degradation of plant biomass. Examples of hemicellulases include, but are not limited to, an acetylmannan esterase, an acetylxylan esterase, an arabinanase, an arabinofuranosidase, a coumaric acid esterase, a feruloyl esterase, a galactosidase, a glucuronidase, a glucuronoyl esterase, a mannanase, a mannosidase, a xylanase, and a xylosidase. The substrates of these enzymes, the hemicelluloses, are a heterogeneous group of branched and linear polysaccharides that are bound via hydrogen bonds to the cellulose microfibrils in the plant cell wall, crosslinking them into a robust network. Hemicelluloses are also covalently attached to lignin, forming together with cellulose a highly complex structure. The variable structure and organization of hemicelluloses require the concerted action of many enzymes for its complete degradation. The catalytic modules of hemicellulases are either glycoside hydrolases (GHs) that hydrolyze glycosidic bonds, or carbohydrate esterases (CEs), which hydrolyze ester linkages of acetate or ferulic acid side groups. These catalytic modules, based on homology of their primary sequence, can be assigned into GH and CE families. Some families, with an overall similar fold, can be further grouped into clans, marked alphabetically (e.g., GH-A). A most informative and updated classification of these and other carbohydrate active enzymes is available in the Carbohydrate-Active Enzymes (CAZy) data-base. Hemicellulolytic enzyme activities can be measured according to Ghose and Bisaria, 1987, Pure & Appl. Chem. 59: 1739-1752, at a suitable temperature, e.g., 50°C, 55°C, or 60°C, and pH, e.g., 5.0 or 5.5.

Polypeptide having cellulolytic enhancing activity: The term "polypeptide having cellulolytic enhancing activity" means a GH61 polypeptide that catalyzes the enhancement of the hydrolysis of a cellulosic material by enzyme having cellulolytic activity. In one aspect, a mixture of CEL-LUCLAST® 1.5L (Novozymes A/S, Bagsværd, Denmark) in the presence of 2-3% of total protein weight *Aspergillus oryzae* beta-glucosidase (recombinantly produced in *Aspergillus oryzae* according to WO 02/095014) or 2-3% of total protein weight *Aspergillus fumigatus* beta-glucosidase (recombinantly produced in *Aspergillus oryzae* as described in WO 2002/095014) of cellulase protein loading is used as the source of the cellulolytic activity.

The GH61 polypeptides having cellulolytic enhancing activity enhance the hydrolysis of a cellulosic material catalyzed by enzyme having cellulolytic activity by reducing the amount of cellulolytic enzyme required to reach the same degree of hydrolysis preferably at least 1.01-fold, e.g., at least 1.05-fold, at least 1.10-fold, at least 1.25-fold, at least 1.5-fold, at least 2-fold, at least 3-fold, at least 4-fold, at least 5-fold, at least 10-fold, or at least 20-fold.

Protease: The term "proteolytic enzyme" or "protease" means one or more (e.g., several) enzymes that break down the amide bond of a protein by hydrolysis of the peptide bonds that link amino acids together in a polypeptide chain.

Xylan degrading activity or xylanolytic activity: The term "xylan degrading activity" or "xylanolytic activity" means a biological activity that hydrolyzes xylan-containing material. The two basic approaches for measuring xylanolytic activity include: (1) measuring the total xylanolytic activity, and (2) measuring the individual xylanolytic activities (e.g., endoxylanases, beta-xylosidases, arabinofuranosidases, alpha-glucuronidases, acetylxylan esterases, feruloyl esterases, and alpha-glucuronyl esterases). Recent progress in assays of xylanolytic enzymes was summarized in several publications including Biely and Puchard, Recent progress in the assays of xylanolytic enzymes, 2006, Journal of the Science of Food and Agriculture 86(11): 1636-1647; Spanikova and Biely, 2006, Glucuronoyl esterase - Novel carbohydrate esterase produced by Schizophyllum commune, FEBS Letters 580(19): 4597-4601; Herrmann, Vrsanska, Jurickova, Hirsch, Biely, and Kubicek, 1997, The beta-D-xylosidase of Trichoderma reesei is a multifunctional beta-D-xylan xylohydrolase, Biochemical Journal 321: 375-381.

Total xylan degrading activity can be measured by determining the reducing sugars formed from various types of xylan, including, for example, oat spelt, beechwood, and larchwood xylans, or by photometric determination of dyed xylan fragments released from various covalently dyed xylans. The most common total xylanolytic activity assay is based on production of reducing sugars from polymeric 4-O-methyl glucuronoxylan as described in Bailey, Biely, Poutanen, 1992, Interlaboratory testing of methods for assay of xylanase activity, Journal of Biotechnology 23(3): 257-270. Xylanase activity can also be determined with 0.2% AZCL-arabinoxylan as substrate in 0.01% TRITON® X-100 (4-(1,1,3,3-tetramethylbutyl)phenyl-polyethylene glycol) and 200 mM sodium phosphate buffer pH 6 at 37°C. One unit of xylanase activity is defined as 1.0 micromole of azurine produced per minute at 37°C, pH 6 from 0.2% AZCL-arabinoxylan as substrate in 200 mM sodium phosphate pH 6 buffer.

For purposes of the present invention, xylan degrading activity is determined by measuring the increase in hydrolysis of birchwood xylan (Sigma Chemical Co., Inc., St. Louis, MO, USA) by xylan-degrading enzyme(s) under the following typical conditions: 1 ml reactions, 5 mg/ml substrate (total solids), 5 mg of xylanolytic protein/g of substrate, 50 mM sodium acetate pH 5, 50°C, 24 hours, sugar analysis using p-hydroxybenzoic acid hydrazide (PHBAH) assay as described by Lever, 1972, A new reaction for colorimetric determination of carbohydrates, Anal. Biochem 47: 273-279.

Xylanase: The term "xylanase" means a 1,4-beta-D-xylan-xylohydrolase (E.C. 3.2.1.8) that catalyzes the endohydrolysis of 1,4-beta-D-xylosidic linkages in xylans. For purposes of the present invention, xylanase activity is determined with 0.2% AZCL-arabinoxylan as substrate in 0.01% TRITON® X-100 and 200 mM sodium phosphate buffer pH 6 at 37°C. One unit of xylanase activity is defined as 1.0 micromole of azurine produced per minute at 37°C, pH 6 from 0.2% AZCL-arabinoxylan as substrate in 200 mM sodium phosphate pH 6 buffer.

Other Definitions

Crop kernels: The term "crop kernels" includes kernels from, e.g., corn (maize), rice, barley, sorghum bean, fruit hulls, and wheat. Corn kernels are exemplary. A variety of corn kernels are known, including, e.g., dent corn, flint corn, pod corn, striped maize, sweet corn, waxy corn and the like.

In an aspect, the corn kernel is yellow dent corn kernel. Yellow dent corn kernel has an outer covering referred to as the "Pericarp" that protects the germ in the kernels. It resists water and water vapour and is undesirable to insects and microorganisms.

The only area of the kernels not covered by the "Pericarp" is the "Tip Cap", which is the attachment point of the kernel to the cob.

Germ: The "Germ" is the only living part of the corn kernel. It contains the essential genetic information, enzymes, vitamins, and minerals for the kernel to grow into a corn plant. In yellow dent corn, about 25 percent of the germ is corn oil. The endosperm covered surrounded by the germ comprises about 82 percent of the kernel dry weight and is the source of energy (starch) and protein for the germinating seed. There are two types of endosperm, soft and hard. In the hard endosperm, starch is packed tightly together. In the soft endosperm, the starch is loose.

Starch: The term "starch" means any material comprised of complex polysaccharides of plants, composed of glucose units that occurs widely in plant tissues in the form of storage granules, consisting of amylose and amylopectin, and represented as $(C_6H_{10}O_5)_n$, where n is any number.

Milled: The term "milled" refers to plant material which has been broken down into smaller particles, e.g., by crushing, fractionating, grinding, pulverizing, etc.

Grind or grinding: The term "grinding" means any process that breaks the pericarp and opens the crop kernel.

Steep or steeping: The term "steeping" means soaking the crop kernel with water and optionally $SO_2$.

Dry solids: The term "dry solids" is the total solids of a slurry in percent on a dry weight basis.

Oligosaccharide: The term "oligosaccharide" is a compound having 2 to 10 monosaccharide units.

Wet milling benefit: The term "wet milling benefit" means one or more of improved starch yield and/or purity, improved gluten quality and/or yield, improved fiber, gluten, or steep water filtration, dewatering and evaporation, easier germ separation and/or better post-saccharification filtration, and process energy savings thereof.

Allelic variant: The term "allelic variant" means any of two or more (e.g., several) alternative forms of a gene occupying the same chromosomal locus. Allelic variation arises naturally through mutation, and may result in polymorphism within populations. Gene mutations can be silent (no change in the encoded polypeptide) or may encode polypeptides having altered amino acid sequences. An allelic variant of a polypeptide is a polypeptide encoded by an allelic variant of a gene.

cDNA: The term "cDNA" means a DNA molecule that can be prepared by reverse transcription from a mature, spliced, mRNA molecule obtained from a eukaryotic or prokaryotic cell. cDNA lacks intron sequences that may be present in the corresponding genomic DNA. The initial, primary RNA transcript is a precursor to mRNA that is processed through a series of steps, including splicing, before appearing as mature spliced mRNA.

Coding sequence: The term "coding sequence" means a polynucleotide, which directly specifies the amino acid sequence of a polypeptide. The boundaries of the coding sequence are generally determined by an open reading frame, which begins with a start codon such as ATG, GTG, or TTG and ends with a stop codon such as TAA, TAG, or TGA. The coding sequence may be a genomic DNA, cDNA, synthetic DNA, or a combination thereof.

Fragment: The term "fragment" means a polypeptide having one or more (e.g., several) amino acids absent from the amino and/or carboxyl terminus of a mature polypeptide main; wherein the fragment has enzyme activity. In one aspect, a fragment contains at least 85%, e.g., at least 90% or at least 95% of the amino acid residues of the mature polypeptide of an enzyme.

High stringency conditions: The term "high stringency conditions" means for probes of at least 100 nucleotides in length, prehybridization and hybridization at 42°C in 5X SSPE, 0.3% SDS, 200 micrograms/ml sheared and denatured salmon sperm DNA, and 50% formamide, following standard Southern blotting procedures for 12 to 24 hours. The carrier material is finally washed three times each for 15 minutes using 2X SSC, 0.2% SDS at 65°C.

Low stringency conditions: The term "low stringency conditions" means for probes of at least 100 nucleotides in length, prehybridization and hybridization at 42°C in 5X SSPE, 0.3% SDS, 200 micrograms/ml sheared and denatured salmon sperm DNA, and 25% formamide, following standard Southern blotting procedures for 12 to 24 hours. The carrier material is finally washed three times each for 15 minutes using 2X SSC, 0.2% SDS at 50°C.

Mature polypeptide: The term "mature polypeptide" means a polypeptide in its final form following translation and any post-translational modifications, such as N terminal processing, C terminal truncation, glycosylation, phosphorylation, etc.

It is known in the art that a host cell may produce a mixture of two of more different mature polypeptides (i.e., with a different C-terminal and/or N-terminal amino acid) expressed by the same polynucleotide.

Mature polypeptide coding sequence: The term "mature polypeptide coding sequence" means a polynucleotide that encodes a mature polypeptide having enzyme activity.

Medium stringency conditions: The term "medium stringency conditions" means for probes of at least 100 nucleotides in length, prehybridization and hybridization at 42°C in 5X SSPE, 0.3% SDS, 200 micrograms/ml sheared and denatured salmon sperm DNA, and 35% formamide, following standard Southern blotting procedures for 12 to 24 hours. The carrier material is finally washed three times each for 15 minutes using 2X SSC, 0.2% SDS at 55°C.

Medium-high stringency conditions: The term "medium-high stringency conditions" means for probes of at least 100 nucleotides in length, prehybridization and hybridization at 42°C in 5X SSPE, 0.3% SDS, 200 micrograms/ml sheared and denatured salmon sperm DNA, and 35% formamide, following standard Southern blotting procedures for 12 to 24 hours. The carrier material is finally washed three times each for 15 minutes using 2X SSC, 0.2% SDS at 60°C.

Parent Enzyme: The term "parent" means an enzyme to which an alteration is made to produce a variant. The parent may be a naturally occurring (wild-type) polypeptide or a variant thereof.

Sequence identity: The relatedness between two amino acid sequences or between two nucleotide sequences is described by the parameter "sequence identity".

For purposes of the present disclosure, the sequence identity between two amino acid sequences is determined using the Needleman-Wunsch algorithm (Needleman and Wunsch, 1970, J. Mol. Biol. 48: 443-453) as implemented in the Needle program of the EMBOSS package (EMBOSS: The European Molecular Biology Open Software Suite, Rice et al., 2000, Trends Genet. 16: 276-277), preferably version 5.0.0 or later. The parameters used are gap open penalty of 10, gap extension penalty of 0.5, and the EBLOSUM62 (EMBOSS version of BLOSUM62) substitution matrix. The output of Needle labeled "longest identity" (obtained using the -nobrief option) is used as the percent identity and is calculated as follows:

$$\text{(Identical Residues x 100)/(Length of Alignment – Total Number of Gaps in Alignment)}$$

For purposes of the present disclosure, the sequence identity between two deoxyribonucleotide sequences is determined using the Needleman-Wunsch algorithm (Needleman and Wunsch, 1970, supra) as implemented in the Needle program of the EMBOSS package (EMBOSS: The European Molecular Biology Open Software Suite, Rice et al., 2000, supra), preferably version 5.0.0 or later. The parameters used are gap open penalty of 10, gap extension penalty of 0.5, and the EDNAFULL (EMBOSS version of NCBI NUC4.4) substitution matrix. The output of Needle labeled "longest identity" (obtained using the -nobrief option) is used as the percent identity and is calculated as follows:

$$\text{(Identical Deoxyribonucleotides x 100)/(Length of Alignment – Total Number of Gaps in Alignment)}$$

Subsequence: The term "subsequence" means a polynucleotide having one or more (e.g., several) nucleotides absent from the 5' and/or 3' end of a mature polypeptide coding sequence; wherein the subsequence encodes a fragment having enzyme activity. In one aspect, a subsequence contains at least 85%, e.g., at least 90% or at least 95% of the nucleotides of the mature polypeptide coding sequence of an enzyme.

Variant: The term "variant" means a polypeptide having enzyme or enzyme enhancing activity comprising an alteration, i.e., a substitution, insertion, and/or deletion, at one or more (e.g., several) positions. A substitution means replacement of the amino acid occupying a position with a different amino acid; a deletion means removal of the amino acid occupying a position; and an insertion means adding an amino acid adjacent to and immediately following the amino acid occupying a position.

In one aspect, the variant differs by up to 10 amino acids, e.g., 1, 2, 3, 4, 5, 6, 7, 8, 9, or 10, from the mature polypeptide of a SEQ ID NO: as identified herein. In another aspect, the present disclosure relates to variants of the mature polypeptide of a SEQ ID NO: herein comprising a substitution, deletion, and/or insertion at one or more (e.g., several) positions. In an aspect of the disclosure, the number of amino acid substitutions, deletions and/or insertions introduced into the mature polypeptide of a SEQ ID NO: herein is up to 10, e.g., 1, 2, 3, 4, 5, 6, 7, 8, 9, or 10. The amino acid changes may be of a minor nature, that is conservative amino acid substitutions or insertions that do not significantly affect the folding and/or activity of the protein; small deletions, typically of 1-30 amino acids; small amino- or carboxyl-terminal extensions, such as an amino-terminal methionine residue; a small linker peptide of up to 20-25 residues; or a small extension that facilitates purification by changing net charge or another function.

Wild-Type Enzyme: The term "wild-type" enzyme means an enzyme expressed by a naturally occurring microorganism, such as a bacterium, yeast, or filamentous fungus found in nature.

**The Milling Process**

The kernels are milled in order to open up the structure and to allow further processing and to separate the kernels into the four main constituents: starch, germ, fiber and protein.

In one aspect, a wet milling process is used. Wet milling gives a very good separation of germ and meal (starch granules and protein) and is often applied at locations where there is a parallel production of syrups.

The inventors of the present invention have surprisingly found that the quality of the starch final product may be improved by treating crop kernels in the processes as described herein.

The processes of the invention result in comparison to traditional processes in a higher starch quality, in that the final starch product is more pure and/or a higher yield is obtained and/or less process time is used. Another advantage may be that the amount of chemicals, such as SO2 and NaHSO3, which need to be used, may be reduced or even fully removed.

Wet milling

Starch is formed within plant cells as tiny granules insoluble in water. When put in cold water, the starch granules may absorb a small amount of the liquid and swell. At temperatures up to about 50°C to 75°C the swelling may be reversible. However, with higher temperatures an irreversible swelling called "gelatinization" begins. Granular starch to be processed according to the present invention may be a crude starch-containing material comprising (e.g., milled) whole grains including non-starch fractions such as germ residues and fibers. The raw material, such as whole grains, may be reduced in particle size, e.g., by wet milling, in order to open up the structure and allowing for further processing. Wet milling gives a good separation of germ and meal (starch granules and protein) and is often applied at locations where the starch hydrolyzate is used in the production of, e.g., syrups.

In an aspect the particle size is reduced to between 0.05-3.0 mm, preferably 0.1-0.5 mm, or so that at least 30%, preferably at least 50%, more preferably at least 70%, even more preferably at least 90% of the starch-containing material fits through a sieve with a 0.05-3.0 mm screen, preferably 0.1-0.5 mm screen.

More particularly, degradation of the kernels of corn and other crop kernels into starch suitable for conversion of starch into mono- and oligo-saccharides, ethanol, sweeteners, etc. consists essentially of four steps:

1. Steeping and germ separation,

2. Fiber washing and drying,

3. Starch gluten separation, and

4. Starch washing.

1. Steeping and germ separation

Corn kernels are softened by soaking in water for between about 30 minutes to about 48 hours, preferably 30 minutes to about 15 hours, such as about 1 hour to about 6 hours at a temperature of about 50°C, such as between about 45°C to 60°C. During steeping, the kernels absorb water, increasing their moisture levels from 15 percent to 45 percent and more than doubling in size. The optional addition of e.g. 0.1 percent sulfur dioxide (SO2) and/or NaHSO3 to the water prevents excessive bacteria growth in the warm environment. As the corn swells and softens, the mild acidity of the steepwater begins to loosen the gluten bonds within the corn and release the starch. After the corn kernels are steeped they are cracked open to release the germ. The germ contains the valuable corn oil. The germ is separated from the heavier density mixture of starch, hulls and fiber essentially by "floating" the germ segment free of the other substances under closely controlled conditions. This method serves to eliminate any adverse effect of traces of corn oil in later processing steps.

In an aspect of the disclosure the kernels are soaked in water for 2-10 hours, preferably about 3-5 hours at a temperature in the range between 40 and 60°C, preferably around 50°C.

In one aspect, 0.01-1%, preferably 0.05-0.3%, especially 0.1% SO2 and/or NaHSO3 may be added during soaking.

2. Fiber washing and drying

To get maximum starch recovery, while keeping any fiber in the final product to an absolute minimum, it is necessary to wash the free starch from the fiber during processing. The fiber is collected, slurried and screened to reclaim any residual starch or protein.

3. Starch gluten separation

The starch-gluten suspension from the fiber-washing step, called mill starch, is separated into starch and gluten. Gluten has a low density compared to starch. By passing mill starch through a centrifuge, the gluten is readily spun out.

4. Starch washing.

The starch slurry from the starch separation step contains some insoluble protein and much of solubles. They have to be removed before a top quality starch (high purity starch) can be made. The starch, with just one or two percent protein remaining, is diluted, washed 8 to 14 times, rediluted and washed again in hydroclones to remove the last trace of protein and produce high quality starch, typically more than 99.5% pure.

Products

Wet milling can be used to produce, without limitation, corn steep liquor, corn gluten feed, germ, corn oil, corn gluten meal, cornstarch, modified corn starch, syrups such as corn syrup, and corn ethanol.

**Enzymes**

The enzyme(s) and polypeptides described below are to be used in an "effective amount" in processes of the present invention. Below should be read in context of the enzyme disclosure in the "Definitions"-section above.

Acetylxylan Esterases (AXE)

In an aspect the acetylxylan esterase is derived from a strain of *Trichoderma,* such as a strain of *Trichoderma reesei*; a strain of *Humicola*, such as a strain of *Humicola insolens,* a strain of *Thielavia,* such as a strain of *Thielavia terrestris*, a strain of the genus *Myceliophtera*, such as a strain of *Myceliophtera therophila*, and/or a strain of the genus *Aspergillus,* such as a strain of *Aspergillus aculaetus.*

In an aspect the acetylxylan esterase (AXE) is derived from a strain of the genus *Trichoderma*, such as a strain of Trichoderma reesei. In an aspect, the AXE is AXE1 of *Trichoderma reesei.*

In an aspect the acetylxylan esterase (AXE) is derived from a strain of the genus *Humicola*, such as a strain of *Humicola insolens,* such as one disclosed in WO 2009/073709 as SEQ ID NO: 2 or as SEQ ID NO: 1 herein or an acetylxylan esterase having at least 80%, such as at least 85%, such as at least 90%, preferably 95%, such as at least 96%, such as 97%, such as at least 98%, such as at least 99% identity to SEQ ID NO: 2 in WO 2009/073709 or SEQ ID NO: 1 herein. In one aspect, the protease differs by up to 10 amino acids, *e.g.*, 1, 2, 3, 4, 5, 6, 7, 8, 9, or 10, from the mature polypeptide of SEQ ID NO: 1. In another aspectaspect, the present disclosure relates to variants of the mature polypeptide of SEQ ID NO: 1 comprising a substitution, deletion, and/or insertion at one or more (*e.g.*, several) positions. In an aspect, the number of amino acid substitutions, deletions and/or insertions introduced into the mature polypeptide of SEQ ID NO: 1 is up to 10, *e.g.*, 1, 2, 3, 4, 5, 6, 7, 8, 9, or 10. The amino acid changes may be of a minor nature, that is conservative amino acid substitutions or insertions that do not significantly affect the folding and/or activity of the protein; small deletions, typically of 1-30 amino acids; small amino- or carboxyl-terminal extensions, such as an amino-terminal methionine residue; a small linker peptide of up to 20-25 residues; or a small extension that facilitates purification by changing net charge or another function.

In an aspect the acetylxylan esterase is derived from a strain of the genus *Thielavia,* such as a strain of *Thielavia terrestris*, such as one disclosed in WO 2009/042846 as SEQ ID NO: 2 or SEQ ID NO: 2 herein or an acetylxylan esterase having at least 80%, such as at least 85%, such as at least 90%, preferably 95%, such as at least 96%, such as 97%, such as at least 98%, such as at least 99% identity to SEQ ID NO: 2 in WO 2009/042846 or SEQ ID NO: 2 herein. In one aspect, the protease differs by up to 10 amino acids, e.g., 1, 2, 3, 4, 5, 6, 7, 8, 9, or 10, from the mature polypeptide of SEQ ID NO: 2. In another aspect, the present disclosure relates to variants of the mature polypeptide of SEQ ID NO: 2 comprising a substitution, deletion, and/or insertion at one or more (e.g., several) positions. In an aspect, the number of amino acid substitutions, deletions and/or insertions introduced into the mature polypeptide of SEQ ID NO: 2 is up to 10, *e.g.,* 1, 2, 3, 4, 5, 6, 7, 8, 9, or 10. The amino acid changes may be of a minor nature, that is conservative amino acid substitutions or insertions that do not significantly affect the folding and/or activity of the protein; small deletions, typically of 1-30 amino acids; small amino- or carboxyl-terminal extensions, such as an amino-terminal methionine residue; a small linker peptide of up to 20-25 residues; or a small extension that facilitates purification by changing net charge or another function.

In another aspect the acetylxylan esterase (AXE) is derived from a strain of the genus *Aspergillus*, such as a strain of *Aspergillus aculaetus*, such as one disclosed in WO 2010/108918 as SEQ ID NO: 2, or an acetylxylan esterase having at least 80%, such as at least 85%, such as at least 90%, preferably 95%, such as at least 96%, such as 97%, such as at least 98%, such as at least 99% identity to SEQ ID NO: 2 in WO 2010/108918.

In another aspect the acetylxylan esterase (AXE) is derived from a strain of the genus *Aspergillus*, such as a strain of *Aspergillus aculaetus*, such as *Aspergillus aculeatus* CBS 101.43, such as the one disclosed in WO 95/02689 as SEQ ID NO: 5, or an acetylxylan esterase having at least 80%, such as at least 85%, such as at least 90%, preferably 95%, such as at least 96%, such as 97%, such as at least 98%, such as at least 99% identity to SEQ ID NO: 5 in WO 95/02689.

In another aspect the acetylxylan esterase (AXE) is derived from a strain of the genus *Myceliophtera*, such as a strain of *Myceliophtera therophila*, such as the one disclosed in WO 2010/014880 as SEQ ID NO: 2, or an acetylxylan esterase having at least 80%, such as at least 85%, such as at least 90%, preferably 95%, such as at least 96%, such as 97%, such as at least 98%, such as at least 99% identity to SEQ ID NO: 2 in WO 2010/014880.

Additional Enzymes

Proteases

The protease may be any protease. Suitable proteases include microbial proteases, such as fungal and bacterial proteases. Preferred proteases are acidic proteases, i.e., proteases characterized by the ability to hydrolyze proteins under acidic conditions below pH 7. Preferred proteases are acidic endoproteases. An acid fungal protease is preferred, but also other proteases can be used.

The acid fungal protease may be derived from *Aspergillus*, *Candida*, *Coriolus*, *Endothia*, *Enthomophtra*, *Irpex*, *Mucor*, *Penicillium*, *Rhizopus*, *Sclerotium*, and *Torulopsis.* In particular, the protease may be derived from *Aspergillus aculeatus* (WO 95/02044), *Aspergillus awamori* (Hayashida et al., 1977, Agric. Biol. Chem. 42(5), 927-933), *Aspergillus niger* (see, e.g., Koaze et al., 1964, Agr. Biol. Chem. Japan 28: 216), *Aspergillus saitoi* (see, e.g., Yoshida, 1954, J. Agr. Chem. Soc. Japan 28: 66), or *Aspergillus oryzae,* such as the pepA protease; and acidic proteases from *Mucor miehei* or *Mucor pusillus.*

In an aspect the acidic protease is a protease complex from A. *oryzae* sold under the tradename Flavourzyme® (from Novozymes A/S) or an aspartic protease from Rhizomucor miehei or Spezyme® FAN or GC 106 from Genencor Int.

In a preferred aspect the acidic protease is an aspartic protease, such as an aspartic protease derived from a strain of *Aspergillus,* in particular A. *aculeatus,* especially A. *aculeatus* CBD 101.43.

Preferred acidic proteases are aspartic proteases, which retain activity in the presence of an inhibitor selected from the group consisting of pepstatin, Pefabloc, PMSF, or EDTA. Protease I derived from A. *aculeatus* CBS 101.43 is such an acidic protease.

In a preferred aspect the process of the invention is carried out in the presence of the acidic Protease I derived from A. *aculeatus* CBS 101.43 in an effective amount.

In another aspect the protease is derived from a strain of the genus *Aspergillus,* such as a strain of *Aspergillus aculaetus*, such as *Aspergillus aculeatus* CBS 101.43, such as the one disclosed in WO 95/02044, or a protease having at least 80%, such as at least 85%, such as at least 90%, preferably 95%, such as at least 96%, such as 97%, such as at least 98%, such as at least 99% identity to protease of WO 95/02044. In one aspect, the protease differs by up to 10 amino acids, e.g., 1, 2, 3, 4, 5, 6, 7, 8, 9, or 10, from the mature polypeptide of WO 95/02044. In another aspect, the present disclosure relates to variants of the mature polypeptide of WO 95/02044 comprising a substitution, deletion, and/or insertion at one or more (e.g., several) positions. In an aspect, the number of amino acid substitutions, deletions and/or insertions introduced into the mature polypeptide of WO 95/02044 is up to 10, *e.g.,* 1, 2, 3, 4, 5, 6, 7, 8, 9, or 10. The amino acid changes may be of a minor nature, that is conservative amino acid substitutions or insertions that do not significantly affect the folding and/or activity of the protein; small deletions, typically of 1-30 amino acids; small amino- or carboxyl-terminal extensions, such as an amino-terminal methionine residue; a small linker peptide of up to 20-25 residues; or a small extension that facilitates purification by changing net charge or another function.

The protease may be a neutral or alkaline protease, such as a protease derived from a strain of *Bacillus.* A particular protease is derived from *Bacillus amyloliquefaciens* and has the sequence obtainable at Swissprot as Accession No. P06832. The proteases may have at least 90% sequence identity to the amino acid sequence disclosed in the Swissprot Database, Accession No. P06832 such as at least 92%, at least 95%, at least 96%, at least 97%, at least 98%, or particularly at least 99% identity.

The protease may have at least 90% sequence identity to the amino acid sequence disclosed as sequence 1 in WO 2003/048353 such as at 92%, at least 95%, at least 96%, at least 97%, at least 98%, or particularly at least 99% identity.

The protease may be a papain-like protease selected from the group consisting of proteases within EC 3.4.22.* (cysteine protease), such as EC 3.4.22.2 (papain), EC 3.4.22.6 (chymopapain), EC 3.4.22.7 (asclepain), EC 3.4.22.14 (actinidain), EC 3.4.22.15 (cathepsin L), EC 3.4.22.25 (glycyl endopeptidase) and EC 3.4.22.30 (caricain).

In an aspect, the protease is a protease preparation derived from a strain of *Aspergillus,* such as *Aspergillus oryzae.* In another aspect the protease is derived from a strain of *Rhizomucor,* preferably *Rhizomucor miehei.* In another aspect the protease is a protease preparation, preferably a mixture of a proteolytic preparation derived from a strain of *Aspergillus,* such as *Aspergillus oryzae*, and a protease derived from a strain of *Rhizomucor,* preferably *Rhizomucor miehei.*

Aspartic acid proteases are described in, for example, Handbook of Proteolytic Enzymes, Edited by A.J. Barrett, N.D. Rawlings and J.F. Woessner, Academic Press, San Diego, 1998, Chapter 270. Examples of aspartic acid proteases include, e.g., those disclosed in Berka et al., 1990, Gene 96: 313; Berka et al., 1993, Gene 125: 195-198; and Gomi et al., 1993, Biosci. Biotech. Biochem. 57: 1095-1100.

The protease also may be a metalloprotease, which is defined as a protease selected from the group consisting of:

(a) proteases belonging to EC 3.4.24 (metalloendopeptidases); preferably EC 3.4.24.39 (acid metallo proteinases);

(b) metalloproteases belonging to the M group of the above Handbook;

(c) metalloproteases not yet assigned to clans (designation: Clan MX), or belonging to either one of clans MA, MB, MC, MD, ME, MF, MG, MH (as defined at pp. 989-991 of the above Handbook);

(d) other families of metalloproteases (as defined at pp. 1448-1452 of the above Handbook);

(e) metalloproteases with a HEXXH motif;

(f) metalloproteases with an HEFTH motif;

(g) metalloproteases belonging to either one of families M3, M26, M27, M32, M34, M35, M36, M41, M43, or M47 (as defined at pp. 1448-1452 of the above Handbook);

(h) metalloproteases belonging to the M28E family; and

(i) metalloproteases belonging to family M35 (as defined at pp. 1492-1495 of the above Handbook).

In other particular aspects, metalloproteases are hydrolases in which the nucleophilic attack on a peptide bond is mediated by a water molecule, which is activated by a divalent metal cation. Examples of divalent cations are zinc, cobalt or manganese. The metal ion may be held in place by amino acid ligands. The number of ligands may be five, four, three, two, one or zero. In a particular aspect the number is two or three, preferably three.

There are no limitations on the origin of the metalloprotease used in a process of the invention.

In an aspect the metalloprotease is classified as EC 3.4.24, preferably EC 3.4.24.39. In one aspect, the metalloprotease is an acid-stable metalloprotease, e.g., a fungal acid-stable metalloprotease, such as a metalloprotease derived from a strain of the genus *Thermoascus*, preferably a strain of *Thermoascus aurantiacus,* especially *Thermoascus aurantiacus* CGMCC No. 0670 (classified as EC 3.4.24.39). In another aspect, the metalloprotease is derived from a strain of the genus *Aspergillus,* preferably a strain of *Aspergillus oryzae.*

In one aspect the metalloprotease has a degree of sequence identity to amino acids 159 to 177, or preferably amino acids 1 to 177 (the mature polypeptide) of SEQ ID NO: 1 of WO 2010/008841 (a *Thermoascus aurantiacus* metalloprotease) of at least 80%, at least 82%, at least 85%, at least 90%, at least 95%, or at least 97%; and which have metalloprotease activity.

The *Thermoascus aurantiacus* metalloprotease is a preferred example of a metalloprotease suitable for use in a process of the invention. Another metalloprotease is derived from *Aspergillus oryzae* and comprises SEQ ID NO: 11 disclosed in WO 2003/048353, or amino acids 23-353; 23-374; 23-397; 1-353; 1-374; 1-397; 177-353; 177-374; or 177-397 thereof, and SEQ ID NO: 10 disclosed in WO 2003/048353.

Another metalloprotease suitable for use in a process of the invention is the *Aspergillus oryzae* metalloprotease comprising SEQ ID NO: 5 of WO 2010/008841, or a metalloprotease is an isolated polypeptide which has a degree of identity to SEQ ID NO: 5 of at least about 80%, at least 82%, at least 85%, at least 90%, at least 95%, or at least 97%; and which have metalloprotease activity. In particular aspects, the metalloprotease consists of the amino acid sequence of SEQ ID NO: 5.

In a particular aspect, a metalloprotease has an amino acid sequence that differs by forty, thirty-five, thirty, twenty-five, twenty, or by fifteen amino acids from amino acids 159 to 177, or +1 to 177 of the amino acid sequences of the *Thermoascus aurantiacus* or *Aspergillus oryzae* metalloprotease.

In another aspect, a metalloprotease has an amino acid sequence that differs by ten, or by nine, or by eight, or by seven, or by six, or by five amino acids from amino acids 159 to 177, or +1 to 177 of the amino acid sequences of these metalloproteases, e.g., by four, by three, by two, or by one amino acid.

In particular aspects, the metalloprotease a) comprises or b) consists of

i) the amino acid sequence of amino acids 159 to 177, or +1 to 177 of SEQ ID NO: 1 of WO 2010/008841;

ii) the amino acid sequence of amino acids 23-353, 23-374, 23-397, 1-353, 1-374, 1-397, 177-353, 177-374, or 177-397 of SEQ ID NO: 3 of WO 2010/008841;

iii) the amino acid sequence of SEQ ID NO: 5 of WO 2010/008841; or

allelic variants, or fragments, of the sequences of i), ii), and iii) that have protease activity.

A fragment of amino acids 159 to 177, or +1 to 177 of SEQ ID NO: 1 of WO 2010/008841 or of amino acids 23-353, 23-374, 23-397, 1-353, 1-374, 1-397, 177-353, 177-374, or 177-397 of SEQ ID NO: 3 of WO 2010/008841; is a polypeptide having one or more amino acids deleted from the amino and/or carboxyl terminus of these amino acid sequences. In one aspect a fragment contains at least 75 amino acid residues, or at least 100 amino acid residues, or at least 125 amino acid residues, or at least 150 amino acid residues, or at least 160 amino acid residues, or at least 165 amino acid residues, or at least 170 amino acid residues, or at least 175 amino acid residues.

In another aspect, the metalloprotease is combined with another protease, such as a fungal protease, preferably an acid fungal protease.

In a preferred aspect the protease is S53 protease 3 from *Meripilus giganteus*, e.g.,one disclosed in Examples 1 and 2 in PCT/EP2013/068361.

Commercially available products include ALCALASE®, ESPERASE™, FLAVOURZYME™, NEUTRASE®, RENNILASE®, NOVOZYM™ FM 2.0L, and iZyme BA (available from Novozymes A/S, Denmark) and GC106™ and SPEZYME™ FAN from Genencor International, Inc., USA.

The protease may be present in an amount of 0.0001-1 mg enzyme protein per g dry solids (DS) kernels, preferably 0.001 to 0.1 mg enzyme protein per g DS kernels.

In an aspect, the protease is an acidic protease added in an amount of 1-20,000 HUT/100 g DS kernels, such as 1-10,000 HUT/100 g DS kernels, preferably 300-8,000 HUT/100 g DS kernels, especially 3,000-6,000 HUT/100 g DS kernels, or 4,000-20,000 HUT/100 g DS kernels acidic protease, preferably 5,000-10,000 HUT/100 g, especially from 6,000-16,500 HUT/100 g DS kernels.

Cellulolytic Compositions

In an aspect, the cellulolytic composition comprises an acetylxylan esterase useful according to the invention.

In an aspect, the cellulolytic composition comprises enzymatic activities aside from or in addition to acetylxylan esterase.

In an aspect the cellulolytic composition is derived from a strain of *Trichoderma,* such as a strain of *Trichoderma reesei*; a strain of *Humicola*, such as a strain of *Humicola insolens,* and/or a strain of *Chrysosporium*, such as a strain of *Chrysosporium lucknowense.*

In a preferred aspect the cellulolytic composition is derived from a strain of *Trichoderma reesei.*

The cellulolytic composition may comprise one or more of the following polypeptides, including enzymes: GH61 polypeptide having cellulolytic enhancing activity, beta-glucosidase, beta-xylosidase, CBHI and CBHII, endoglucanase, xylanase, or a mixture of two, three, or four thereof.

In an aspect the cellulolytic composition comprises a GH61 polypeptide having cellulolytic enhancing activity and a beta-glucosidase.

In an aspect the cellulolytic composition comprises a GH61 polypeptide having cellulolytic enhancing activity and a beta-xylosidase.

In an aspect, the cellulolytic composition comprises a GH61 polypeptide having cellulolytic enhancing activity and an endoglucanase.

In an aspect, the cellulolytic composition comprises a GH61 polypeptide having cellulolytic enhancing activity and a xylanase.

In an aspect, the cellulolytic composition comprises a GH61 polypeptide having cellulolytic enhancing activity, an endoglucanase, and a xylanase.

In an aspect the cellulolytic composition comprises a GH61 polypeptide having cellulolytic enhancing activity, a beta-glucosidase, and a beta-xylosidase. In an aspect the cellulolytic composition comprises a GH61 polypeptide having cellulolytic enhancing activity, a beta-glucosidase, and an endoglucanase. In an aspect the cellulolytic composition comprises a GH61 polypeptide having cellulolytic enhancing activity, a beta-glucosidase, and a xylanase.

In an aspect the cellulolytic composition comprises a GH61 polypeptide having cellulolytic enhancing activity, a beta-xylosidase, and an endoglucanase. In an aspect the cellulolytic composition comprises a GH61 polypeptide having cellulolytic enhancing activity, a beta-xylosidase, and a xylanase.

In an aspect the cellulolytic composition comprises a GH61 polypeptide having cellulolytic enhancing activity, a beta-glucosidase, a beta-xylosidase, and an endoglucanase. In an aspect the cellulolytic composition comprises a GH61 polypeptide having cellulolytic enhancing activity, a beta-glucosidase, a beta-xylosidase, and a xylanase. In an aspect the cellulolytic composition comprises a GH61 polypeptide having cellulolytic enhancing activity, a beta-glucosidase, an endoglucanase, and a xylanase.

In an aspect the cellulolytic composition comprises a GH61 polypeptide having cellulolytic enhancing activity, a beta-xylosidase, an endoglucanase, and a xylanase.

In an aspect the cellulolytic composition comprises a GH61 polypeptide having cellulolytic enhancing activity, a beta-glucosidase, a beta-xylosidase, an endoglucanase, and a xylanase.

In an aspect the endoglucanase is an endoglucanase I.

In an aspect the endoglucanase is an endoglucanase II.

In an aspect, the cellulolytic composition comprises a GH61 polypeptide having cellulolytic enhancing activity, an endoglucanase I, and a xylanase.

In an aspect, the cellulolytic composition comprises a GH61 polypeptide having cellulolytic enhancing activity, an endoglucanase II, and a xylanase.

In another aspect the cellulolytic composition comprises a GH61 polypeptide having cellulolytic enhancing activity, a beta-glucosidase, and a CBHI.

In another aspect the cellulolytic composition comprises a GH61 polypeptide having cellulolytic enhancing activity, a beta-glucosidase, a CBHI and a CBHII.

The cellulolytic composition may further comprise one or more enzymes selected from the group consisting of an esterase, an expansin, a laccase, a ligninolytic enzyme, a pectinase, a peroxidase, a protease, a swollenin, and a phytase.

**GH61 polypeptide having cellulolytic enhancing activity**

The cellulolytic composition may in one aspect comprise one or more GH61 polypeptide having cellulolytic enhancing activity.

In one aspect GH61 polypeptide having cellulolytic enhancing activity, is derived from the genus *Thermoascus*, such as a strain of *Thermoascus aurantiacus,* such as the one described in WO 2005/074656 as SEQ ID NO: 2; or SEQ ID NO: 3 herein, or a GH61 polypeptide having cellulolytic enhancing activity having at least 80%, such as at least 85%, such such as at least 90%, preferably 95%, such as at least 96%, such as 97%, such as at least 98%, such as at least 99% identity to SEQ ID NO: 2 in WO 2005/074656 or SEQ ID NO: 3 herein. In one aspect, the protease differs by up to 10 amino acids, e.g., 1, 2, 3, 4, 5, 6, 7, 8, 9, or 10, from the mature polypeptide of SEQ ID NO: 3. In another aspect, the present disclosure relates to variants of the mature polypeptide of SEQ ID NO: 3 comprising a substitution, deletion, and/or insertion at one or more (e.g., several) positions. In an aspect, the number of amino acid substitutions, deletions and/or insertions introduced into the mature polypeptide of SEQ ID NO: 3 is up to 10, *e.g.,* 1, 2, 3, 4, 5, 6, 7, 8, 9, or 10. The amino acid changes may be of a minor nature, that is conservative amino acid substitutions or insertions that do not significantly affect the folding and/or activity of the protein; small deletions, typically of 1-30 amino acids; small amino- or carboxyl-terminal extensions, such as an amino-terminal methionine residue; a small linker peptide of up to 20-25 residues; or a small extension that facilitates purification by changing net charge or another function.

In one aspect, the GH61 polypeptide having cellulolytic enhancing activity, is derived from a strain derived from *Penicillium,* such as a strain of *Penicillium emersonii,* such as the one disclosed in WO 2011/041397 or SEQ ID NO: 4 herein, or a GH61 polypeptide having cellulolytic enhancing activity having at least 80%, such as at least 85%, such such as at least 90%, preferably 95%, such as at least 96%, such as 97%, such as at least 98%, such as at least 99% identity to SEQ ID NO: 2 in WO 2011/041397 or SEQ ID NO: 4 herein. In one aspect, the protease differs by up to 10 amino acids, e.g., 1, 2, 3, 4, 5, 6, 7, 8, 9, or 10, from the mature polypeptide of SEQ ID NO: 4. In another aspect, the present disclosure relates to variants of the mature polypeptide of SEQ ID NO: 4 comprising a substitution, deletion, and/or insertion at one or more (e.g., several) positions. In an aspect, the number of amino acid substitutions, deletions and/or insertions introduced into the mature polypeptide of SEQ ID NO: 4 is up to 10, *e.g.,* 1, 2, 3, 4, 5, 6, 7, 8, 9, or 10. The amino acid changes may be of a minor nature, that is conservative amino acid substitutions or insertions that do not significantly affect the folding and/or activity of the protein; small deletions, typically of 1-30 amino acids; small amino- or carboxyl-terminal extensions, such as an amino-terminal methionine residue; a small linker peptide of up to 20-25 residues; or a small extension that facilitates purification by changing net charge or another function.

In one aspect the GH61 polypeptide having cellulolytic enhancing activity is derived from the genus *Thielavia,* such as a strain of *Thielavia terrestris,* such as the one described in WO 2005/074647 as SEQ ID NO: 7 and SEQ ID NO: 8; or one derived from a strain of *Aspergillus,* such as a strain of *Aspergillus fumigatus,* such as the one described in WO 2010/138754 as SSEQ ID NO: 2, or a GH61 polypeptide having cellulolytic enhancing activity having at least 80%, such as at least 85%, such such as at least 90%, preferably 95%, such as at least 96%, such as 97%, such as at least 98%, such as at least 99% identity thereto.

**Endoglucanase**

In one aspect, the cellulolytic composition comprises an endoglucanase, such as an endoglucanase I or endoglucanase II.

Examples of bacterial endoglucanases that can be used in the processes of the present invention, include, but are not limited to, an *Acidothermus cellulolyticus* endoglucanase (WO 91/05039; WO 93/15186; U.S. Patent No. 5,275,944; WO 96/02551; U.S. Patent No. 5,536,655, WO 00/70031, WO 05/093050); *Thermobifida fusca* endoglucanase III (WO 05/093050); and *Thermobifida fusca* endoglucanase V (WO 05/093050).

Examples of fungal endoglucanases that can be used in the present invention, include, but are not limited to, a *Trichoderma reesei* endoglucanase I (Penttila et al., 1986, Gene 45: 253-263, *Trichoderma reesei* Cel7B endoglucanase I (GENBANK™ accession no. M15665), *Trichoderma reesei* endoglucanase II (Saloheimo, et al., 1988, Gene 63:11-22), *Trichoderma reesei* Cel5A endoglucanase II (GENBANK™ accession no. M19373), *Trichoderma reesei* endoglucanase III (Okada et al., 1988, Appl. Environ. Microbiol. 64: 555-563, GENBANK™ accession no. AB003694), *Trichoderma reesei* endoglucanase V (Saloheimo et al., 1994, Molecular Microbiology 13: 219-228, GENBANK™ accession no. Z33381), *Aspergillus aculeatus* endoglucanase (Ooi et al., 1990, Nucleic Acids Research 18: 5884), *Aspergillus kawachii* endoglucanase (Sakamoto et al., 1995, Current Genetics 27: 435-439), *Erwinia carotovara* endoglucanase (Saarilahti et al., 1990, Gene 90: 9-14), *Fusarium oxysporum* endoglucanase (GENBANK™ accession no. L29381), *Humicola grisea* var. *thermoidea* endoglucanase (GENBANK™ accession no. AB003107), *Melanocarpus albomyces* endoglucanase (GEN-BANK™ accession no. MAL515703), *Neurospora crassa* endoglucanase (GENBANK™ accession no. XM_324477), *Humicola insolens* endoglucanase V, *Myceliophthora thermophila* CBS 117.65 endoglucanase, basidiomycete CBS 495.95 endoglucanase, basidiomycete CBS 494.95 endoglucanase, *Thielavia terrestris* NRRL 8126 CEL6B endoglucanase, *Thielavia terrestris* NRRL 8126 CEL6C endoglucanase, *Thielavia terrestris* NRRL 8126 CEL7C endoglucanase, *Thielavia terrestris* NRRL 8126 CEL7E endoglucanase, *Thielavia terrestris* NRRL 8126 CEL7F endoglucanase, *Cladorrhinum foecundissimum* ATCC 62373 CEL7A endoglucanase, and *Trichoderma reesei* strain No. VTT-D-80133 endoglucanase (GENBANK™ accession no. M15665).

In one aspect, the endoglucanase is an endoglucanase II, such as one derived from *Trichoderma,* such as a strain of *Trichoderma reesei,* such as the one described in WO 2011/057140 as SEQ ID NO: 22; or SEQ ID NO: 5 herein, or an endoglucanase having at least 80%, such as at least 85%, such such as at least 90%, preferably 95%, such as at least 96%, such as 97%, such as at least 98%, such as at least 99% identity to SEQ ID NO: 22 in WO 2011/057140 or SEQ ID NO: 5 herein. In one aspect, the protease differs by up to 10 amino acids, e.g., 1, 2, 3, 4, 5, 6, 7, 8, 9, or 10, from the mature polypeptide of SEQ ID NO: 5. In another aspect, the present disclosure relates to variants of the mature polypeptide of SEQ ID NO: 5 comprising a substitution, deletion, and/or insertion at one or more (e.g., several) positions.

In an aspect, the number of amino acid substitutions, deletions and/or insertions introduced into the mature polypeptide of SEQ ID NO: 5 is up to 10, *e.g.,* 1, 2, 3, 4, 5, 6, 7, 8, 9, or 10. The amino acid changes may be of a minor nature, that is conservative amino acid substitutions or insertions that do not significantly affect the folding and/or activity of the protein; small deletions, typically of 1-30 amino acids; small amino- or carboxyl-terminal extensions, such as an amino-terminal methionine residue; a small linker peptide of up to 20-25 residues; or a small extension that facilitates purification by changing net charge or another function.

**Xylanase**

In one aspect, the cellulolytic composition comprises a xylanase. In a preferred aspect, the xylanase is a Family 10 xylanase.

Examples of xylanases useful in the processes of the present invention include, but are not limited to, xylanases from *Aspergillus aculeatus* (GeneSeqP:AAR63790; WO 94/21785), *Aspergillus fumigatus* (WO 2006/078256), *Penicillium pinophilum* (WO 2011/041405), *Penicillium* sp. (WO 2010/126772), *Thielavia terrestris* NRRL 8126 (WO 2009/079210), and *Trichophaea saccata* GH10 (WO 2011/057083).

In one aspect the GH10 xylanase is derived from the genus *Aspergillus,* such as a strain of *Aspergillus aculeatus,* such as the one described in WO 94/021785 as SEQ ID NO: 5 (referred to as Xyl II); or SEQ ID NO: 6 herein, or a GH10 xylanase having at least 80%, such as at least 85%, such such as at least 90%, preferably 95%, such as at least 96%, such as 97%, such as at least 98%, such as at least 99% identity to SEQ ID NO: 5 in WO 94/021785 or SEQ ID NO: 6 herein. In one aspect, the xylanase differs by up to 10 amino acids, e.g., 1, 2, 3, 4, 5, 6, 7, 8, 9, or 10, from the mature polypeptide of SEQ ID NO: 6. In another aspect, the present invention relates to variants of the mature polypeptide of SEQ ID NO: 6 comprising a substitution, deletion, and/or insertion at one or more (e.g., several) positions. In an aspect, the number of amino acid substitutions, deletions and/or insertions introduced into the mature polypeptide of SEQ ID NO: 6 is up to 10, *e.g.,* 1, 2, 3, 4, 5, 6, 7, 8, 9, or 10. The amino acid changes may be of a minor nature, that is conservative amino acid substitutions or insertions that do not significantly affect the folding and/or activity of the protein; small deletions, typically of 1-30 amino acids; small amino- or carboxyl-terminal extensions, such as an amino-terminal methionine residue; a small linker peptide of up to 20-25 residues; or a small extension that facilitates purification by changing net charge or another function.

In one aspect the GH10 xylanase is derived from the genus *Aspergillus,* such as a strain of *Aspergillus fumigatus*, such as described as SEQ ID NO: 6 in WO 2006/078256 as Xyl III; or SEQ ID NO: 7 herein, or a GH10 xylanase having at least 80%, such as at least 85%, such such as at least 90%, preferably 95%, such as at least 96%, such as 97%, such as at least 98%, such as at least 99% identity to Xyl III in WO 2006/078256 or SEQ ID NO: 7 herein. In one aspect, the xylanase differs by up to 10 amino acids, e.g., 1, 2, 3, 4, 5, 6, 7, 8, 9, or 10, from the mature polypeptide of SEQ ID NO: 7. In another aspect, the present disclosure relates to variants of the mature polypeptide of SEQ ID NO: 7 comprising a substitution, deletion, and/or insertion at one or more (e.g., several) positions. In an aspect, the number of amino acid substitutions, deletions and/or insertions introduced into the mature polypeptide of SEQ ID NO: 7 is up to 10, *e.g.,* 1, 2, 3, 4, 5, 6, 7, 8, 9, or 10. The amino acid changes may be of a minor nature, that is conservative amino acid substitutions or insertions that do not significantly affect the folding and/or activity of the protein; small deletions, typically of 1-30 amino acids; small amino- or carboxyl-terminal extensions, such as an amino-terminal methionine residue; a small linker peptide of up to 20-25 residues; or a small extension that facilitates purification by changing net charge or another function.

**Beta-xylosidase**

Examples of beta-xylosidases useful in the processes of the present invention include, but are not limited to, beta-xylosidases from *Neurospora crassa* (SwissProt accession number Q7SOW4), *Trichoderma reesei* (UniProtKB/TrEMBL accession number Q92458), and *Talaromyces emersonii* (SwissProt accession number Q8X212).

In one aspect the beta-xylosidase is derived from the genus *Aspergillus,* such as a strain *of Aspergillus fumigatus*, such as the one described in WO 2011/057140 as SEQ ID NO: 206; or SEQ ID NO: 8 herein, or a beta-xylosidase having at least 80%, such as at least 85%, such such as at least 90%, preferably 95%, such as at least 96%, such as 97%, such as at least 98%, such as at least 99% identity to SEQ ID NO: 206 in WO 2011/057140 or SEQ ID NO: 8 herein. In one aspect, the beta-xylosidase differs by up to 10 amino acids, e.g., 1, 2, 3, 4, 5, 6, 7, 8, 9, or 10, from the mature polypeptide of SEQ ID NO: 8. In another aspect, the present disclosure relates to variants of the mature polypeptide of SEQ ID NO: 8 comprising a substitution, deletion, and/or insertion at one or more (e.g., several) positions. In an aspect, the number of amino acid substitutions, deletions and/or insertions introduced into the mature polypeptide of SEQ ID NO: 8 is up to 10, *e.g.,* 1, 2, 3, 4, 5, 6, 7, 8, 9, or 10. The amino acid changes may be of a minor nature, that is conservative amino acid substitutions or insertions that do not significantly affect the folding and/or activity of the protein; small deletions, typically of 1-30 amino acids; small amino- or carboxyl-terminal extensions, such as an amino-terminal methionine residue; a small linker peptide of up to 20-25 residues; or a small extension that facilitates purification by changing net charge or another function.

In one aspect the beta-xylosidase is derived from a strain of the genus *Aspergillus,* such as a strain of *Aspergillus fumigatus,* such as the one disclosed in US provisional # 61/526,833 or PCT/US12/052163 or SEQ ID NO: 16 in WO 2013/028928 (See Examples 16 and 17), or derived from a strain of *Trichoderma,* such as a strain of *Trichoderma reesei,* such as the mature polypeptide of SEQ ID NO: 58 in WO 2011/057140 or a beta-xylosidase having at least 80%, such as at least 85%, such such as at least 90%, preferably 95%, such as at least 96%, such as 97%, such as at least 98%, such as at least 99% identity thereto.

**Beta-Glucosidase**

The cellulolytic composition may in one aspect comprise one or more beta-glucosidase. The beta-glucosidase may in one aspect be one derived from a strain of the genus *Aspergillus,* such as *Aspergillus oryzae,* such as the one disclosed in WO 2002/095014 or the fusion protein having beta-glucosidase activity disclosed e.g., as SEQ ID NO: 74 or 76 in WO 2008/057637, or *Aspergillus fumigatus,* such as one disclosed as SEQ ID NO: 2 in WO 2005/047499 or an *Aspergillus fumigatus* beta-glucosidase variant, such as one disclosed in PCT application PCT/US11/054185 or WO 2012/044915 (or US provisional application # 61/388,997), such as one with the following substitutions: F100D, S283G, N456E, F512Y.

In one aspect the beta-glucosidase is derived from the genus *Aspergillus,* such as a strain of *Aspergillus fumigatus,* such as the one described as SEQ ID NO: 2 in WO 2005/047499, or a beta-glucosidase having at least 80%, such as at least 85%, such such as at least 90%, preferably 95%, such as at least 96%, such as 97%, such as at least 98%, such as at least 99% identity thereto.

In one aspect the beta-glucosidase is derived from the genus *Aspergillus,* such as a strain of *Aspergillus fumigatus,* such as the one described as SEQ ID NO: 2 in WO 2005/047499 or in WO 2012/044915, or a beta-glucanase having at least 80%, such as at least 85%, such such as at least 90%, preferably 95%, such as at least 96%, such as 97%, such as at least 98%, such as at least 99% identity thereto.

**Cellobiohydrolase I**

The cellulolytic composition may in one aspect may comprise one or more CBH I (cellobiohydrolase I). In one aspect the cellulolytic composition comprises a cellobiohydrolase I (CBHI), such as one derived from a strain of the genus Aspergillus, such as a strain of *Aspergillus fumigatus,* such as the Cel7A CBHI disclosed in SEQ ID NO: 2 in WO 2011/057140, or a strain of the genus *Trichoderma,* such as a strain of *Trichoderma reesei.*

In one aspect the cellobiohydrolyase I is derived from the genus *Aspergillus,* such as a strain of *Aspergillus fumigatus,* such as the one described as SEQI ID NO: 6 in WO 2011/057140, or a CBH I having at least 80%, such as at least 85%, such such as at least 90%, preferably 95%, such as at least 96%, such as 97%, such as at least 98%, such as at least 99% identity thereto.

**Cellobiohydrolase II**

The cellulolytic composition may in one aspect comprise one or more CBH II (cellobiohydrolase II). In one aspect the cellobiohydrolase II (CBHII), such as one derived from a strain of the genus *Aspergillus,* such as a strain of *Aspergillus fumigatus,* , or a strain of the genus *Trichoder*ma, such as *Trichoderma reesei,* or a strain of the genus *Thielavia,* such as a strain of *Thielavia terrestris*, such as cellobiohydrolase II CEL6A from *Thielavia terrestris.*

In one aspect the cellobiohydrolyase II is derived from the genus *Aspergillus,* such as a strain of *Aspergillus fumigatus,* such as the one described as SEQ ID NO: 18 in WO 2011/057140, or a CBH II having at least 80%, such as at least 85%, such as at least 90%, preferably 95%, such as at least 96%, such as 97%, such as at least 98%, such as at least 99% identity thereto.

**Exemplary Cellulolytic Compositions**

As mentioned above the cellulolytic composition may comprise a number of different polypeptides, such as enzymes.

In an aspect, the cellulolytic composition comprises a *Trichoderma reesei* cellulase preparation containing *Aspergillus oryzae* beta-glucosidase fusion protein ((e.g., SEQ ID NO: 74 or 76 in WO 2008/057637) and *Thermoascus aurantiacus* GH61A polypeptide (e.g., SEQ ID NO: 2 in WO 2005/074656).

In an aspect, the cellulolytic composition comprises a blend of an *Aspergillus aculeatus* GH10 xylanase (e.g., SEQ ID NO: 5 (Xyl II) in WO 94/021785) and a *Trichoderma reesei* cellulase preparation containing *Aspergillus fumigatus* beta-glucosidase (e.g., SEQ ID NO: 2 in WO 2005/047499) and *Thermoascus aurantiacus* GH61A polypeptide (SEQ ID NO: 2 in WO 2005/074656).

In an aspect, the cellulolytic composition comprises a blend of an *Aspergillus fumigatus* GH10 xylanase (e.g., SEQ ID NO: 6 (Xyl III) in WO 2006/078256) and *Aspergillus fumigatus* beta-xylosidase (e.g., SEQ ID NO: 206 in WO 2011/057140) with a *Trichoderma reesei* cellulase preparation containing *Aspergillus fumigatus* cellobiohydrolase I (e.g., SEQ ID NO: 6 in WO 2011/057140), *Aspergillus fumigatus* cellobiohydrolase II (e.g., SEQ ID NO: 18 in WO 2011/057140), *Aspergillus fumigatus* beta-glucosidase variant (e.g., one having F100D, S283G, N456E, F512Y substitutions disclosed in WO 2012/044915), and *Penicillium* sp. (*emersonii*) GH61 polypeptide (e.g., SEQ ID NO: 2 disclosed in WO 2011/041397).

In an aspect the cellulolytic composition comprises a *Trichoderma reesei* cellulolytic enzyme composition, further comprising *Thermoascus aurantiacus* GH61A polypeptide having cellulolytic enhancing activity (e.g., SEQ ID NO: 2 in WO 2005/074656) and *Aspergillus oryzae* beta-glucosidase fusion protein (e.g., SEQ ID NO: 74 or 76 in WO 2008/057637).

In another aspect the cellulolytic composition comprises a *Trichoderma reesei* cellulolytic enzyme composition, further comprising *Thermoascus aurantiacus* GH61A polypeptide having cellulolytic enhancing activity (SEQ ID NO: 2 in WO 2005/074656) and *Aspergillus fumigatus* beta-glucosidase (SEQ ID NO: 2 in WO 2005/047499).

In another aspect the cellulolytic composition comprises a *Trichoderma reesei* cellulolytic enzyme composition, further comprising *Penicillium emersonii* GH61A polypeptide having cellulolytic enhancing activity disclosed as, e.g., SEQ ID NO: 2 in WO 2011/041397, *Aspergillus fumigatus* beta-glucosidase (SEQ ID NO: 2 in WO 2005/047499) or a variant thereof with the following substitutions: F100D, S283G, N456E, F512Y.

The enzyme composition of the present invention may be in any form suitable for use, such as, for example, a crude fermentation broth with or without cells removed, a cell lysate with or without cellular debris, a semi-purified or purified enzyme composition, or a host cell, e.g., *Trichoderma* host cell, as a source of the enzymes.

The enzyme composition may be a dry powder or granulate, a non-dusting granulate, a liquid, a stabilized liquid, or a stabilized protected enzyme. Liquid enzyme compositions may, for instance, be stabilized by adding stabilizers such as a sugar, a sugar alcohol or another polyol, and/or lactic acid or another organic acid according to established processes.

According to the invention an effective amount of one or more of the following activities may also be present or added during treatment of the kernels: pentosanase, pectinase, arabinanase, arabinofurasidase, xyloglucanase, phytase activity.

It is believed that after the division of the kernels into finer particles the enzyme(s) can act more directly and thus more efficiently on cell wall and protein matrix of the kernels. Thereby the starch is washed out more easily in the subsequent steps.

**Enzymatic Amount**

Enzymes may be added in an effective amount, which can be adjusted according to the practitioner and particular process needs. In general, enzyme may be present in an amount of 0.0001-1 mg enzyme protein per g dry solids (DS) kernels, such as 0.001-0.1 mg enzyme protein per g DS kernels. In particular aspects, the enzyme may be present in an amount of, e.g., 1 μg, 2.5 μg, 5 μg, 10 μg, 20 μg, 25 μg, 50 μg, 75 μg, 100 μg, 125 μg, 150 μg, 175 μg, 200 μg, 225 μg, 250 μg, 275 μg, 300 μg, 325 μg, 350 μg, 375 μg, 400 μg, 450 μg, 500 μg, 550 μg, 600 μg, 650 μg, 700 μg, 750 μg, 800 μg, 850 μg, 900 μg, 950 μg, 1000 μg enzyme protein per g DS kernels.

**EXAMPLES**

**Materials and Methods**

Enzymes:

Acetylxylan Esterase A: Trichoderma reesei acetylxylan esterase, Eur J Biochem., vol. 237, pages 553-560 (1996).

Acetylxylan Esterase B: *Humicola insolens* acetylxylan esterase (SEQ ID NO: 2 in WO 2009/073709).

Acetylxylan Esterase C: *Thielavia terrestris* acetylxylan esterase (SEQ ID NO: 2 in WO 2009/042846).

Protease I: Acidic protease from *Aspergillus aculeatus,* CBS 101.43 disclosed in WO 95/02044.

Protease A: *Aspergillus oryzae* aspergillopepsin A, disclosed in Gene, vol. 125, issue 2, pages 195-198 (30 March 1993).

Protease B: A metalloprotease from *Thermoascus aurantiacus* (AP025) having the acid sequence shown in SEQ ID NO: 2 in WO2003/048353A1.

Protease C: *Rhizomucor miehei* derived aspartic endopeptidase produced in *Aspergillus oryz*ae (Novoren™).

Cellulase A: A blend of an *Aspergillus aculeatus* GH10 xylanase (SEQ ID NO: 5 (Xyl II) in WO 1994/021785) and a *Trichoderma reesei* cellulolytic enzyme composition containing *Aspergillus fumigatus* beta-glucosidase (SEQ ID NO: 2 in WO 2005/047499) and *Thermoascus aurantiacus* GH61A polypeptide (SEQ ID NO: 2 in WO 2005/074656).

Cellulase B: A *Trichoderma reesei* cellulase preparation containing *Aspergillus oyrzae* beta-glucosidase fusion protein (WO 2008/057637) and *Thermoascus aurantiacus* GH61A polypeptide (SEQ ID NO: 2 in WO 2005/074656).

Cellulase C: A blend of an *Aspergillus fumigatus* GH10 xylanase (SEQ ID NO: 6 in WO 2006/078256) and *Aspergillus fumigatus* beta-xylosidase (SEQ ID NO: 16 in WO 2013/028928 - see Examples 16 and 17) with a *Trichoderma reesei* cellulolytic enzyme compositioncontaining *Aspergillus fumigatus* cellobiohydrolyase I (SEQ ID NO: 6 in WO 2011/057140), *Aspergillus fumigatus* cellobiohydrolase II (SEQ ID NO: 16 in WO 2011/057140), Aspergillus fumigatus beta-glucosidase variant (with F100D, S283G, N456E, F512Y substitutions disclosed in WO 2012/044915), and *Penicillium* sp. (*emersonii*) GH61 polypeptide (SEQ ID NO: 2 in WO 2011/041397).

Cellulase D: *Aspergillus aculeatus* GH10 xylanase (SEQ ID NO: 5 (Xyl II) in WO 1994/021785).

Cellulase E: A *Trichoderma reesei* cellulolytic enzyme compositioncontaining *Aspergillus aculeatus* GH10 xylanase (SEQ ID NO: 5 (Xyl II) in WO 1994/021785).

Cellulase F: A *Trichoderma reesei* cellulase preparation containing *Aspergillus fumigatus* GH10 xylanase (SEQ ID NO: 6 (Xyl III) in WO 2006/078256) and *Aspergillus fumigatus* beta-xylosidase (SEQ ID NO: 16 in WO2013/028928).

Cellulase G: A cellulase preparation containing *Aspergillus aculeatus* Family 10 xylanase (SEQ ID NO: 5 (Xyl II) in WO 1994/021785) and cellulolytic enzyme composition derived from *Trichoderma reesei* RutC30.

Cellulase H: *Aspergillus aculeatus* Family 10 xylanase (SEQ ID NO: 5 in WO 1994/021785).

Methods

Determination of protease HUT activity:

1 HUT is the amount of enzyme which, at 40°C and pH 4.7 over 30 minutes forms a hydrolysate from digesting denatured hemoglobin equivalent in absorbancy at 275 nm to a solution of 1.10 $\mu$g/ml tyrosine in 0.006 N HCl which absorbancy is 0.0084. The denatured hemoglobin substrate is digested by the enzyme in a 0.5 M acetate buffer at the given conditions. Undigested hemoglobin is precipitated with trichloroacetic acid and the absorbance at 275 nm is measured of the hydrolysate in the supernatant.

**Example 1. Wet Milling in the Presence of Acetylxylan Esterase**

Four treatments of corn (Steeps A through D) were put through a simulated corn wet milling process according to the procedure below.

A steep solution containing 0.06% (w/v) $SO_2$ and 0.5% (w/v) lactic acid was assembled. 100 grams of dry regular (yellow dent) corn was cleaned to remove the broken kernels and put into 200 mL of the steep water described above for each flask. All flasks were then put into an orbital air heated shaker machine which was set to 52°C with mild shaking and allowed to mix at this temperature for 16 hours. After 16 hours, all flasks were removed from the air shaker. The corn mixture was poured over a Buchner funnel to dewater it, and 100 mL of fresh tap water was then added to the original steeping flask and swirled for rinsing purpose. It was then poured over the corn as a wash and captured in the same flask as the original corn draining. The purpose of this washing step was to retain as many of the solubles with the filtrate as possible. The filtrate containing solubles was called "light steep water". The total light steep water fraction collected was then oven-dried to determine the amount of dry substance present. The drying was done by overnight drying in oven set by 105°C.

The corn was then placed into a Waring Laboratory Blender with the blades reversed (so the leading edge was dull). 200 mL of water was added to the corn in the blender, and the corn was then ground for one minute at low speed setting to facilitate germ release. Once ground, the slurry was transferred back to flasks for enzymatic incubation step. 50 mL fresh water was used to rinse the blender and the wash water was added to the flask as well. The flasks were dosed with enzyme as outlined below in Table 1 and returned to orbital shaker to be incubated at 52°C for another 4 hours at higher mixing rate. All were given a base dose of underlying cellulase and protease, however Steeps B, C, and D were each given an additional dose of an acetylxylan esterase (designated as Acetylxylan Esterase A, Acetylxylan Esterase B, and Acetylxylan Esterase C), each expressed from a different host organism.

Table 1. Experimental design (doses applied per gram of corn dry substance)

| Enzyme | Cellulase F (ug/g DS) | Protease I (ug/g DS) | Acetylxylan Esterase A (ug/g DS) | Acetylxylan Esterase B (ug/g DS) | Acetylxylan Esterase C (ug/g DS) |
|---|---|---|---|---|---|
| Steep A | 25 | 2.5 | - | - | - |
| Steep B | 25 | 2.5 | 10 | - | - |
| Steep C | 25 | 2.5 | - | 10 | - |
| Steep D | 25 | 2.5 | - | - | 10 |

After incubation, the slurry was transferred to a large beaker for released germ removal.

For degermination, a slotted spoon was used to gently stir the mixture briefly. After the stirring was stopped, large quantities of germ pieces floated to the surface. These were skimmed off of the liquid surface manually using the slotted spoon. The germ pieces were placed on a US No. 100 (150 $\mu$m) screen with a catch pan underneath of it. This process of mixing and skimming was repeated until negligible amounts of germ floated up to the surface for skimming. Inspection of the slurry mash in the slotted spoon also showed no evidence of large germ quantities left in the mixture at this point, so de-germination was stopped. The germ pieces that had been accumulated on the No. 100 screen were then added to a flask where they were combined with 125 mL of fresh water, and swirled to simulate a germ wash tank. The contents of the flask were then poured over the screen again, making sure to tap the flask and fully clear it of germ. The de-germinated slurry in the skimming beaker was then poured back into the blender, and the germ wash water in the catch pan underneath of the screen was used to rinse the germ beaker to the blender. Another 125 mL of fresh water was then used to conduct a second rinse of the beaker and was added to the blender. The washed germ on the screen was oven dried overnight at 105°C prior to analysis.

The fiber, starch, and gluten slurry that had been de-germinated was then ground in the blender for 3 minutes at high speed. This increased speed was employed to release as much starch and gluten from the fiber as possible. The resulting ground slurry in the blender was screened over a No. 100 vibrating screen (Retsch Model AS200 sieve shaking unit) with a catch pan underneath. The shaking frequency on the Retsch unit was set to roughly 60 HZ. Once filtration had stopped, the starch and gluten filtrate (called "mill starch") in the catch pan was transferred into a flask until further processing. The fiber on the screen was then slurried in 500 mL of fresh water and then re-poured over the vibrating screen to wash the unbound starch off of the fiber. Again, the starch and gluten filtrate in the catch pan was added to the previous mill starch flask.

The fiber was then washed and screened in this manner three successive times, each time using 240 mL of fresh wash water. This was then followed by a single 125 mL wash while vibrating to achieve maximum starch and gluten liberation from the fiber fraction. After all washings were complete, the fiber was gently pressed on the screen to dewater it before it was transferred to an aluminum weighing pan for oven drying at 105°C (overnight). All of the filtrate from the washings and pressing was added to the mill starch flask.

The mill starch slurry was filtered using a Buchner funnel, and the resulting solids cake, along with the filter paper was placed into a pre-weighed glass dish for drying. The total solids content of each filtrate sample was measured by oven drying a 250 mL portion of the filtrate at 105°C to determine solids content. The total soluble solids content of this fraction was calculated by multiplying the volume of filtrate by total solids of filtrate.

The mill starch solids were oven dried at 50°C overnight prior to being dried in a 105°C oven overnight as well. After complete oven drying, each of the fractions was weighed to obtain a dry matter weight.

Table 2 below shows the product yields (percent of dry solids of each fraction per 100 g dry matter of corn) for all treatments.

Table 2. Fraction yields for all treatments

| Steep | A | B | C | D |
|---|---|---|---|---|
| Starch + Gluten | 75.05% | 75.81% | 75.50% | 75.04% |
| Germ | 7.31% | 6.16% | 6.24% | 6.62% |
| Fiber | 9.09% | 9.65% | 9.92% | 9.61% |
| LSW Solubles | 3.72% | 3.94% | 3.73% | 3.95% |
| Filtrate Solubles | 3.02% | 3.20% | 3.31% | 3.23% |

The yield data indicates that the addition of exemplary acetylxylan esterases designated as Acetylxylan Esterase A and Acetylxylan Esterase B to a base mixture of another cellulase and protease can increase the yield of starch and gluten beyond that of the underlying cellulase and protease mixture alone.

**Claims**

1. A process for treating crop kernels, comprising the steps of:

   a) soaking kernels in water to produce soaked kernels;
   b) grinding the soaked kernels; and
   c) treating the soaked kernels in the presence of an effective amount of an acetylxylan esterase;

   wherein step c) is performed before, during or after step b); the process further comprising treating the soaked kernels in the presence of an enzyme selected from the group consisting of a protease, an endoglucanase, a xylanase, a cellobiohydrolase I, a cellobiohydrolase II, a GH61, and a combination thereof.

2. The process of claim 1, further comprising treating the soaked kernels in the presence of an endoglucanase.

3. The process of claim 1, further comprising treating the soaked kernels in the presence of a xylanase.

4. The process of any of the preceding claims, wherein the kernels are soaked in water for about 2-10 hours, preferably about 3 hours.

5. The process of any of the preceding claims, wherein the soaking is carried out at a temperature between about 40°C and about 60°C, preferably about 50°C.

6. The process of any of the preceding claims, wherein the soaking is carried out at acidic pH, preferably about 3-5, such as about 3-4.

7. The process of any of the preceding claims, wherein the soaking is performed in the presence of between 0.01-1%, preferably 0.05-0.3%, especially 0.1% SO2 and/or NaHSO3.

8. The process of any of the preceding claims, wherein the crop kernels are from corn (maize), rice, barley, sorghum bean, or fruit hulls, or wheat.

9. The process according to any of the preceding claims, wherein the crop kernels are from corn.

10. The process of any of the preceding claims, further comprising treating the kernels with pentosanase, pectinase, arabinanase, arabinofurasidase, xyloglucanase, and/or phytase.

11. Use of an acetylxylan esterase to enhance the wet milling benefit of one or more enzymes, wherein the wet milling benefit is one or more of improved starch yield and/or purity, improved gluten quality and/or yield, improved fiber, gluten, or steep water filtration, dewatering and evaporation, easier germ separation and/or better post-saccharification filtration, and process energy savings thereof.

12. The use according to claim 11, wherein the wet milling benefit is increase in starch and gluten yields.

13. The use according to claim 11 or 12, wherein the wet milling consists essentially of four steps:

   1. Steeping and germ separation,
   2. Fiber washing and drying,
   3. Starch gluten separation, and
   4. Starch washing.

14. The use according to any of claims 11-13, wherein wet milling is used to produce corn steep liquor, corn gluten feed, germ, corn oil, corn gluten meal, corn starch, modified corn starch, syrups such as corn syrup, and corn ethanol.

15. The use according to any of claims 11-14, further comprising treating the soaked kernels in the presence of an enzyme selected from the group consisting of an endoglucanase, a xylanase, a cellobiohydrolase I, a cellobiohydrolase II, a GH61, or a combination thereof.

16. The use according to any of claims 11-15, further comprising treating the soaked kernels in the presence of an endoglucanase.

17. The use according to any of claims 11-16, further comprising treating the soaked kernels in the presence of a xylanase.

18. The use according to any of claims 11-17, further comprising treating the soaked kernels in the presence of a cellulolytic composition.

19. The use according to any of claims 11-18, further comprising treating the soaked kernels in the presence of a protease.

**Patentansprüche**

1. Verfahren zum Behandeln von Nutzpflanzenkörnern, umfassend die Schritte:

   a) Einweichen der Körner in Wasser, um eingeweichte Körner zu erzeugen;
   b) Mahlen der eingeweichten Körner; und
   c) Behandeln der eingeweichten Körner in der Gegenwart einer wirksamen Menge einer Acetylxylanesterase;

   wobei Schritt c) vor, während oder nach Schritt b) durchgeführt wird; wobei das Verfahren des Weiteren Behandeln der eingeweichten Körner in der Gegenwart eines Enzyms umfasst, das aus der Gruppe ausgewählt ist, die aus einer Protease, einer Endoglucanase, einer Xylanase, einer Cellobiohydrolase I, einer Cellobiohydrolase II, einem GH61, und einer Kombination davon besteht.

2. Verfahren nach Anspruch 1, das des Weiteren Behandeln der eingeweichten Körner in der Gegenwart einer Endoglucanase umfasst.

3. Verfahren nach Anspruch 1, das des Weiteren Behandeln der eingeweichten Körner in Gegenwart einer Xylanase umfasst.

4. Verfahren nach einem beliebigen der voranstehenden Ansprüche, wobei die Körner für etwa 2-10 Stunden, vorzugsweise etwa 3 Stunden, in Wasser eingeweicht werden.

5. Verfahren nach einem beliebigen der voranstehenden Ansprüche, wobei das Einweichen bei einer Temperatur zwischen etwa 40°C und etwa 60°C, vorzugsweise etwa 50°C, durchgeführt wird.

6. Verfahren nach einem beliebigen der voranstehenden Ansprüche, wobei das Einweichen bei einem sauren pH, vorzugsweise etwa 3-5, wie etwa 3-4, durchgeführt wird.

7. Verfahren nach einem beliebigen der voranstehenden Ansprüche, wobei das Einweichen in der Gegenwart von zwischen 0,01-1%, vorzugsweise 0,05-0,3%, insbesondere 0,1% SO2 und/oder NaHSO3 durchgeführt wird.

8. Verfahren nach einem beliebigen der voranstehenden Ansprüche, wobei die Nutzpflanzenkörner aus Mais (Körnermais), Reis, Gerste, Sorghum, Bohnen oder Fruchthülsen oder Weizen sind.

9. Verfahren nach einem beliebigen der voranstehenden Ansprüche, wobei die Nutzpflanzenkörner aus Mais sind.

10. Verfahren nach einem beliebigen der voranstehenden Ansprüche, das des Weiteren Behandeln der Körner mit Pentosanase, Pektinase, Arabinanase, Arabinofurasidase, Xyloglucanase und/oder Phytase umfasst.

11. Verwendung einer Acetylxylanesterase zum Verstärken des Nassmahlvorteils eines oder mehrerer Enzyme, wobei der Nassmahlvorteil eines oder mehrere aus verbesserter Stärkeausbeute und/oder -reinheit, verbesserter Glutenqualität und/oder -ausbeute, verbesserter Faser, Gluten, oder Quellwasserfiltration, Entwässern und Evaporation, leichterer Keimabtrennung und/oder besserer Filtration nach Verzuckerung, und Verfahrensergieeinsparungen davon ist.

12. Verwendung nach Anspruch 11, wobei der Nassmahlvorteil eine Erhöhung der Stärke- und Glutenausbeuten ist.

13. Verwendung nach Anspruch 11 oder 12, wobei das Nassmahlen im Wesentlichen aus vier Schritten besteht:

1. Quellen und Keimabtrennung,
2. Waschen und Trocknen der Fasern,
3. Stärke-Gluten-Trennung, und
4. Stärkewaschen.

14. Verwendung nach einem beliebigen der Ansprüche 11 bis 13, wobei das Nassmahlen zur Herstellung von Maisquellwasser, Maiskleberfutter, Keim, Maisöl, Maisklebermehl, Maisstärke, modifizierter Maisstärke, Sirupen wie Maissirup, und Maisethanol verwendet wird.

15. Verwendung nach einem beliebigen der Ansprüche 11-14, die des Weiteren Behandeln der eingeweichten Körner in der Gegenwart eines Enzyms umfasst, das aus der Gruppe bestehend aus einer Endoglucanase, einer Xylanase, einer Cellobiohydrolase I, einer Cellobiohydrolase II, einem GH61 oder einer Kombination davon ausgewählt ist.

16. Verwendung nach einem beliebigen der Ansprüche 11-15, die des Weiteren Behandeln der eingeweichten Körner in der Gegenwart einer Endoglucanase umfasst.

17. Verwendung nach einem beliebigen der Ansprüche 11-16, die des Weiteren Behandeln der eingeweichten Körner in der Gegenwart einer Xylanase umfasst.

18. Verwendung nach einem beliebigen der Ansprüche 11-17, die des Weiteren Behandeln der eingeweichten Körner in der Gegenwart einer cellulolytischen Zusammensetzung umfasst.

19. Verwendung nach einem beliebigen der Ansprüche 11-18, die des Weiteren Behandeln der eingeweichten Körner in der Gegenwart einer Protease umfasst.

**Revendications**

1. Procédé pour traiter des grains de culture, comprenant les étapes suivantes :

   a) trempage des grains dans de l'eau pour produire des grains trempés ;
   b) broyage des grains trempés ; et
   c) traitement des grains trempés en présence d'une quantité efficace d'une acétylxylane estérase ;

   dans lequel l'étape c) est effectuée avant, pendant ou après l'étape b); le procédé comprenant en outre le traitement des grains trempés en présence d'une enzyme choisie dans le groupe constitué par une protéase, une endoglucanase, une xylanase, une cellobiohydrolase I, une cellobiohydrolase II, une GH61, et une de leurs combinaisons.

2. Procédé selon la revendication 1, comprenant en outre le traitement des grains trempés en présence d'une endoglucanase.

3. Procédé selon la revendication 1, comprenant en outre le traitement des grains trempés en présence d'une xylanase.

4. Procédé selon l'une quelconque des revendications précédentes, dans lequel les grains sont trempés dans de l'eau pendant environ 2 à 10 heures, de préférence environ 3 heures.

5. Procédé selon l'une quelconque des revendications précédentes, dans lequel le trempage est effectué à une température comprise entre environ 40 °C et environ 60 °C, de préférence d'environ 50 °C.

6. Procédé selon l'une quelconque des revendications précédentes, dans lequel le trempage est effectué à un pH acide, de préférence d'environ 3 à 5, tel qu'environ 3 à 4.

7. Procédé selon l'une quelconque des revendications précédentes, dans lequel le trempage est effectué en présence d'entre 0,01 et 1 %, de préférence d'entre 0,05 à 0,3 %, en particulier de 0,1 % de $SO_2$ et/ou de $NaHSO_3$.

8. Procédé selon l'une quelconque des revendications précédentes, dans lequel les grains de culture proviennent du blé d'Inde (maïs), du riz, de l'orge, du sorgho, du haricot, ou de cosses de fruits, ou du blé.

9. Procédé selon l'une quelconque des revendications précédentes, dans lequel les grains de cultures proviennent du maïs.

10. Procédé selon l'une quelconque des revendications précédentes, comprenant en outre le traitement des grains avec une pentosanase, pectinase, arabinanase, arabinofurasidase, xyloglucanase, et/ou phytase.

11. Utilisation d'une acétylxylane estérase pour amplifier le bénéfice de broyage humide d'une ou plusieurs enzymes, dans laquelle le bénéfice de broyage humide est un ou plusieurs parmi un meilleur rendement et/ou pureté de l'amidon, un meilleur rendement et/ou qualité du gluten, de meilleures filtration, déshumidification et évaporation des fibres, du gluten, ou de l'eau de macération, une séparation plus facile des germes et/ou une meilleure filtration post-saccharification, et les économies en énergie de traitement qui en résultent.

12. Utilisation selon la revendication 11, dans laquelle le bénéfice de broyage humide est une augmentation des rendements en amidon et en gluten.

13. Utilisation selon la revendication 11 ou 12, dans laquelle le broyage humide consiste essentiellement en quatre étapes :

    1. macération et séparation des germes,
    2. lavage et séchage des fibres,
    3. séparation du gluten et de l'amidon, et
    4. lavage de l'amidon.

14. Utilisation selon l'une quelconque des revendications 11 à 13, dans laquelle le broyage humide est utilisé pour produire de la liqueur de macération de maïs, du gros gluten de maïs, des germes, de l'huile de maïs, de la farine de gluten de maïs, de l'amidon de maïs, de l'amidon de maïs modifié, des sirops tels que le sirop de maïs, et de l'éthanol de maïs.

15. Utilisation selon l'une quelconque des revendications 11 à 14, comprenant en outre le traitement des grains trempés en présence d'une enzyme choisie dans le groupe constitué par une endoglucanase, une xylanase, une cellobiohydrolase I, une cellobiohydrolase II, une GH61, ou une de leurs combinaisons.

16. Utilisation selon l'une quelconque des revendications 11 à 15, comprenant en outre le traitement des grains trempés en présence d'une endoglucanase.

17. Utilisation selon l'une quelconque des revendications 11 à 16, comprenant en outre le traitement des grains trempés en présence d'une xylanase.

18. Utilisation selon l'une quelconque des revendications 11 à 17, comprenant en outre le traitement des grains trempés en présence d'une composition cellulolytique.

19. Utilisation selon l'une quelconque des revendications 11 à 18, comprenant en outre le traitement des grains trempés en présence d'une protéase.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6566125 B
- US 5066218 A
- WO 2002000731 A
- WO 2002000911 A
- WO 2002002644 A
- WO 02095014 A
- WO 2002095014 A
- WO 2009073709 A
- WO 2009042846 A
- WO 2010108918 A
- WO 9502689 A
- WO 2010014880 A
- WO 9502044 A
- WO 2003048353 A
- WO 2010008841 A
- EP 2013068361 W
- WO 2005074656 A
- WO 2011041397 A
- WO 2005074647 A
- WO 2010138754 A
- WO 9105039 A
- WO 9315186 A
- US 5275944 A
- WO 9602551 A
- US 5536655 A
- WO 0070031 A
- WO 05093050 A
- WO 2011057140 A
- WO 9421785 A
- WO 2006078256 A
- WO 2011041405 A
- WO 2010126772 A
- WO 2009079210 A
- WO 2011057083 A
- WO 94021785 A
- US 12052163 W
- WO 2013028928 A
- WO 2008057637 A
- WO 2005047499 A
- US 11054185 W
- WO 2012044915 A
- US 61388997 B
- WO 2003048353 A1
- WO 1994021785 A

**Non-patent literature cited in the description**

- **JOHNSTON et al.** *Cereal Chem,* 2004, vol. 81, 626-632
- **VENTURI et al.** Extracellular beta-D-glucosidase from Chaetomium thermophilum var. coprophilum: production, purification and some biochemical properties. *J. Basic Microbiol.,* 2002, vol. 42, 55-66
- **TEERI.** Crystalline cellulose degradation: New insight into the function of cellobiohydrolases. *Trends in Biotechnology,* 1997, vol. 15, 160-167
- **TEERI et al.** Trichoderma reesei cellobiohydrolases: why so efficient on crystalline cellulose?. *Biochem. Soc. Trans.,* 1998, vol. 26, 173-178
- **LEVER et al.** *Anal. Biochem.,* 1972, vol. 47, 273-279
- **VAN TILBEURGH et al.** *FEBS Letters,* 1982, vol. 149, 152-156
- **VAN TILBEURGH ; CLAEYSSENS.** *FEBS Letters,* 1985, vol. 187, 283-288
- **TOMME et al.** *Eur. J. Biochem.,* 1988, vol. 170, 575-581
- **ZHANG et al.** Outlook for cellulase improvement: Screening and selection strategies. *Biotechnology Advances,* 2006, vol. 24, 452-481
- **GHOSE.** Measurement of cellulase activities. *Pure Appl. Chem.,* 1987, vol. 59, 257-68
- **ZHANG et al.** *Biotechnology Advances,* 2006, vol. 24, 452-481
- **GHOSE.** *Pure and Appl. Chem.,* 1987, vol. 59, 257-268
- **HENRISSAT B.** A classification of glycosyl hydrolases based on amino-acid sequence similarities. *Biochem. J,* 1991, vol. 280, 309-316
- **HENRISSAT B. ; BAIROCH A.** Updating the sequence-based classification of glycosyl hydrolases. *Biochem. J,* 1996, vol. 316, 695-696
- **SHALLOM, D. ; SHOHAM, Y.** Microbial hemicellulases. *Current Opinion In Microbiology,* 2003, (3), 219-228
- **GHOSE ; BISARIA.** *Pure & Appl. Chem.,* 1987, vol. 59, 1739-1752

- **BIELY ; PUCHARD.** Recent progress in the assays of xylanolytic enzymes. *Journal of the Science of Food and Agriculture,* 2006, vol. 86 (11), 1636-1647
- **SPANIKOVA ; BIELY.** Glucuronoyl esterase - Novel carbohydrate esterase produced by Schizophyllum commune. *FEBS Letters,* 2006, vol. 580 (19), 4597-4601
- **HERRMANN ; VRSANSKA ; JURICKOVA ; HIRSCH ; BIELY ; KUBICEK.** The beta-D-xylosidase of Trichoderma reesei is a multifunctional beta-D-xylan xylohydrolase. *Biochemical Journal,* 1997, vol. 321, 375-381
- **BAILEY ; BIELY ; POUTANEN.** Interlaboratory testing of methods for assay of xylanase activity. *Journal of Biotechnology,* 1992, vol. 23 (3), 257-270
- **LEVER.** A new reaction for colorimetric determination of carbohydrates. *Anal. Biochem,* 1972, vol. 47, 273-279
- **NEEDLEMAN ; WUNSCH.** *J. Mol. Biol.,* 1970, vol. 48, 443-453
- **RICE et al.** EMBOSS: The European Molecular Biology Open Software Suite. *Trends Genet.,* 2000, vol. 16, 276-277
- **RICE et al.** *EMBOSS: The European Molecular Biology Open Software Suite,* 2000
- **HAYASHIDA et al.** *Agric. Biol. Chem.,* 1977, vol. 42 (5), 927-933
- **KOAZE et al.** *Agr. Biol. Chem. Japan,* 1964, vol. 28, 216
- **YOSHIDA.** *J. Agr. Chem. Soc. Japan,* 1954, vol. 28, 66
- Database. P06832
- Handbook of Proteolytic Enzymes. Academic Press, 1998
- **BERKA et al.** *Gene,* 1990, vol. 96, 313
- **BERKA et al.** *Gene,* 1993, vol. 125, 195-198
- **GOMI et al.** *Biosci. Biotech. Biochem.,* 1993, vol. 57, 1095-1100
- **PENTTILA et al.** *Gene,* 1986, vol. 45, 253-263
- **SALOHEIMO et al.** *Gene,* 1988, vol. 63, 11-22
- **OKADA et al.** *Appl. Environ. Microbiol,* 1988, vol. 64, 555-563
- **SALOHEIMO et al.** *Molecular Microbiology,* 1994, vol. 13, 219-228
- **OOI et al.** *Nucleic Acids Research,* 1990, vol. 18, 5884
- **SAKAMOTO et al.** *Current Genetics,* 1995, vol. 27, 435-439
- **SAARILAHTI et al.** *Gene,* 1990, vol. 90, 9-14
- **ACETYLXYLAN ESTERASE A.** Trichoderma reesei acetylxylan esterase. *Eur J Biochem.,* 1996, vol. 237, 553-560
- *Gene,* 30 March 1993, vol. 125 (2), 195-198